(19) Europäisches Patentamt / European Patent Office / Office européen des brevets

(11) **EP 4 527 633 A1**

(12) **EUROPEAN PATENT APPLICATION**
published in accordance with Art. 153(4) EPC

(43) Date of publication:
**26.03.2025 Bulletin 2025/13**

(21) Application number: **23807640.0**

(22) Date of filing: **16.05.2023**

(51) International Patent Classification (IPC):
**B41M 5/26** (2006.01)     **B32B 27/20** (2006.01)
**C01G 23/047** (2006.01)     **C09D 11/037** (2014.01)

(52) Cooperative Patent Classification (CPC):
**B32B 27/20; B41M 5/26; C01G 23/047;
C09D 11/037**

(86) International application number:
**PCT/JP2023/018266**

(87) International publication number:
**WO 2023/224038 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.05.2022 JP 2022080967
07.04.2023 JP 2023062639**

(71) Applicant: **Oji Holdings Corporation
Chuo-ku
Tokyo 104-0061 (JP)**

(72) Inventors:
• **SATO, So
Tokyo 104-0061 (JP)**
• **ISHIKAWA, Yumi
Tokyo 104-0061 (JP)**
• **MATSUSHITA, Akihiro
Tokyo 104-0061 (JP)**
• **HIRANO, Hironobu
Tokyo 104-0061 (JP)**

(74) Representative: **Godemeyer Blum Lenze
Patentanwälte
Partnerschaft mbB - werkpatent
An den Gärten 7
51491 Overath (DE)**

Remarks:
A request for correction of the description has been filed pursuant to Rule 139 EPC. A decision on the request will be taken during the proceedings before the examining division (Guidelines for Examination in the EPO, A-V, 3).

(54) **ULTRAVIOLET LASER PRINTING PAPER, PRINTED MATTER AND MANUFACTURING METHOD THEREFOR, PROCESSED OBJECT, AND INK COMPOSITION**

(57)    An object of the present invention is to provide a paper sheet for ultraviolet laser printing, which allows a print-out spot excellent in print-out clarity with respect to one dot to be obtained when irradiated with ultraviolet laser, a print product in which an irradiated region is discolored by irradiation of the paper sheet for ultraviolet laser printing, with ultraviolet laser, and a method for producing the print product, as well as an ink composition to be used for production of the paper sheet for ultraviolet laser printing. An additional object of the present invention is to provide a processed article formed with the paper sheet for ultraviolet laser printing or print product. The paper sheet for ultraviolet laser printing of the present invention comprises a print layer comprising titanium oxide, on a paper substrate, in which a titanium oxide content in the print layer is 0.1 g/m$^2$ or more, and a crystallite size of the titanium oxide in the print layer is 30 nm or more.

EP 4 527 633 A1

## Description

Technical Field

The present invention relates to a paper sheet for ultraviolet laser printing, a print product and a method for producing the print product, a processed article, and an ink composition.

Background Art

Conventionally, labelling or ink-jet printing has been performed in order to display dates such as a production date and a ship date, and variable information such as a bar code on a package of a container or the like in which a storage object is stored.

A method of printing-out by laser light irradiation has also been proposed and, for example, PTL 1 has disclosed a stacked article for laser printing, produced by coating an aluminum-deposited surface of aluminum-deposited paper with white ink, black ink and overprint varnish (OP varnish), in order to provide a stacked article for laser printing-out, and a print-out article, in which clear printing-out is easily performed by laser light irradiation at a high speed and a portion where printing-out is applied is excellent in various resistances.

PTL 2 has described an ink composition comprising a first titanium oxide particle having an average particle size of 150 nm or less, to be used for formation of a laser marking layer to be varied in color by irradiation with ultraviolet laser, for the purpose of providing a technique which generates relatively less heat and which is preferably applicable to laser marking of a packaging material.

Citation List

Patent Literature

PTL 1: JP H9-123607 A

PTL 2: JP 2020-75943 A

Summary of Invention

Technical Problem

A method involving directly placing ink on a package surface with a thermal printer or an ink-jet printer is currently frequently used as a printing procedure on a surface of a package, a label, a pressure-sensitive adhesive tape, or the like. However, consumables such as an ink ribbon for thermal printers and an ink for ink-jet printers are expensive, and a problem is that the running cost for printing much varying information is increased. If the exchange of such consumables is neglected, printing leakage may also be caused. While direct printing of varying information on a package according to offset printing with an UV-curable ink is also performed, any print scratch, character deficiency and/or the like may be caused due to grime on a package surface, variation in thickness of a package, and/or the like.

The method described in PTL 1, although can allow for an increase in speed, is a technique involving removing an upper layer easily absorbing laser light, by irradiation with $CO_2$ laser light, to thereby expose a lower layer, and forming a viewable character and/or the like from the difference in color between the upper layer and the lower layer, and therefore the material of the upper layer is limited to one easily absorbing laser light and, on the contrary, the material of the lower layer is limited to one hardly absorbing laser light and also capable of acquiring the color contrast with the upper layer. In other words, the material of the upper layer is a carbon black-based material (black) easily absorbing laser light and the material of the lower layer is a titanium oxide-based material (white), and a character or the like formed by irradiation with laser light is a white character on a black base and is inferior in viewability. In addition, a problem has been that removal of the upper layer causes dusting of the ink in the upper layer, leading to contamination of the working environment.

Furthermore, printing with ultraviolet laser has been made on a coating layer produced with the ink composition described in PTL 2, thereby sometimes causing inferior print-out clarity with respect to one dot in a print-out spot.

An object of the present invention is to provide a paper sheet for ultraviolet laser printing, which allows a print-out spot excellent in print-out clarity with respect to one dot to be obtained when irradiated with ultraviolet laser. Another object of the present invention is to provide a print product in which an irradiated region is discolored by irradiation of the paper sheet for ultraviolet laser printing, with ultraviolet laser, and a method for producing the print product, as well as an ink composition to be used for production of the paper sheet for ultraviolet laser printing. An additional object of the present invention is to provide a processed article formed with the paper sheet for ultraviolet laser printing or print product.

Solution to Problem

The present inventors have found that the above problems can be solved by a paper sheet for ultraviolet laser printing, comprising a print layer comprising titanium oxide, on a paper substrate, in which the titanium oxide content in the print layer is a specified amount or more and the crystallite size of the titanium oxide is a specified value or more, thereby leading to completion of the present invention.

The present invention relates to the following <1> to <16>.

<1> A paper sheet for ultraviolet laser printing, comprising a print layer comprising titanium oxide, on a paper substrate, wherein a titanium oxide content in the print layer is 0.1 $g/m^2$ or more, and a crystallite size of the titanium oxide in the print layer is 30 nm or more.

<2> The paper sheet for ultraviolet laser printing according to <1>, wherein the crystallite size of the titanium oxide is 53 nm or less.

<3> The paper sheet for ultraviolet laser printing according to <1> or <2>, wherein the titanium oxide in the print layer is rutile-type titanium oxide, and the titanium oxide has a diffraction angle of 27.60° or less.

<4> The paper sheet for ultraviolet laser printing according to any one of <1> to <3>, wherein pulp constituting the paper substrate has a length-weighted average fiber length of 2.0 mm or less.

<5> The paper sheet for ultraviolet laser printing according to any one of <1> to <4>, wherein the titanium oxide content in the print layer is 10 $g/m^2$ or less.

<6> The paper sheet for ultraviolet laser printing according to any one of <1> to <5>, wherein a proportion of the number of fine fibers having a fiber length of 0.2 mm or less, in pulp fiber constituting the paper substrate, is 4% or more and 40% or less.

<7> The paper sheet for ultraviolet laser printing according to any one of <1> to <6>, wherein pulp fiber constituting the paper substrate has a degree of water retention of 100% or more.

<8> The paper sheet for ultraviolet laser printing according to any one of <1> to <7>, comprising a sealant layer on an opposite surface to a surface of the paper substrate on which the print layer is provided.

<9> The paper sheet for ultraviolet laser printing according to <8>, further comprising a barrier layer.

<10> A print product obtained from the paper sheet for ultraviolet laser printing according to any one of <1> to <9>, wherein the print layer has a printed region comprising discolored titanium oxide in at least one portion thereof, and a ratio of a Raman intensity assigned to titanium oxide in the printed region to a Raman intensity assigned to titanium oxide in a non-printed region is 0.70 or less.

<11> A processed article obtained with the paper sheet for ultraviolet laser printing according to any one of <1> to <9>, or the print product according to claim 8.

<12> A method for producing a print product, comprising a step of performing printing by irradiation of the paper sheet for ultraviolet laser printing according to any one of <1> to <9>, with ultraviolet laser, and thus discoloration of an irradiated region.

<13> The method for producing a print product according to <12>, wherein the printing step is a step of performing irradiation with ultraviolet laser so that a ratio of a Raman intensity assigned to titanium oxide in the printed region to a Raman intensity assigned to titanium oxide in a non-printed region is 0.70 or less.

<14> An ink composition comprising titanium oxide having a crystallite size of 30 nm or more, to be used for formation of a print layer to be discolored by irradiation with ultraviolet laser.

<15> The ink composition according to <14>, wherein the crystallite size of the titanium oxide is 53 nm or less.

<16> The ink composition according to <14> or <15>, wherein the titanium oxide is rutile-type titanium oxide and the titanium oxide has a diffraction angle of 27.60° or less.

Advantageous Effects of Invention

The present invention provides a paper sheet for ultraviolet laser printing, which allows a print-out spot excellent in print-out clarity with respect to one dot to be obtained when irradiated with ultraviolet laser. The present invention also provides a print product in which an irradiated region is discolored by irradiation of the paper sheet for ultraviolet laser printing, with ultraviolet laser, and a method for producing the print product, as well as an ink composition to be used for production of the paper sheet for ultraviolet laser printing. The present invention further provides a processed article formed with the paper sheet for ultraviolet laser printing or print product.

Brief Description of Drawings

[Fig. 1] Fig. 1 is a schematic perspective view of one example of a liquid container having a printed region.
[Fig. 2] Fig. 2A is a photograph of a depth composite image of a print product in Example 1-4, and Fig. 2B is a photograph of a depth composite image of a print product in Comparative Example 1-2.

Description of Embodiments

[Paper sheet for ultraviolet laser printing]

The paper sheet for ultraviolet laser printing of the present invention (hereinafter, also simply referred to as "paper sheet for printing") comprises a print layer comprising titanium oxide, on a paper substrate, in which a titanium oxide content in the print layer is 0.1 $g/m^2$ or more and a crystallite size of the print layer is 30 nm or more.

The present invention provides a paper sheet for ultraviolet laser printing, which allows a print-out spot excellent in print-out clarity with respect to one dot to be obtained when irradiated with ultraviolet laser.

The detailed reason why the above effects are obtained, although is not clear, is partially considered as follows.

The print layer comprising titanium oxide is comprised on the paper substrate, thereby allowing for printing by discoloration of the titanium oxide in the print layer due to laser irradiation with ultraviolet laser. It is considered that such discoloration of titanium oxide is the change from white to black due to the change in ionic valence of titanium oxide comprised in the print layer, from tetravalent to trivalent, and thus the occurrence of any oxygen defect, and therefore viewing can be made. It is considered that the ionic valence of titanium oxide is changed during irradiation with light energy corresponding to the band gap of titanium oxide. The band gap of titanium oxide, while is varied depending on the crystal system, is generally about 3.0 to 3.2 eV, and the wavelength of the corresponding light is 420 nm or less. Therefore, it is difficult to apply printing due to the change in ionic valence of titanium oxide as in the present invention, even by use of laser light at a wavelength of more than 420 nm (for example, 532 nm, 1064 nm, or 10600 nm). When the titanium oxide content in the print layer is here 0.1 $g/m^2$ or more, a print product excellent in viewability and excellent in print-out clarity with respect to one dot is obtained.

It is considered that, when the crystallite size of the titanium oxide is 30 nm or more, crystal defects are less caused and recombination of excited electrons and holes is inhibited from occurring, thereby allowing the titanium oxide to be easily reduced and easily discolored, to provide a print-out spot excellent in print-out clarity with respect to one dot.

In the present embodiment, the printable region means a region (portion) where printing due to irradiation with ultraviolet laser can be made by discoloration of titanium oxide in a portion irradiated with ultraviolet laser, from white to black, and the printed region means a viewable position in which titanium oxide is discolored actually due to irradiation with ultraviolet laser, namely, a portion irradiated with ultraviolet laser, in the printable region. The non-printed region means a region (portion) not irradiated with ultraviolet laser, in the printable region.

Hereinafter, the present invention will be described in more detail.

The paper sheet for ultraviolet laser printing has a printable region comprising titanium oxide.

The paper sheet for printing comprises a print layer comprising titanium oxide, on a paper substrate. The print layer may be formed on at least one surface or both surfaces of the paper substrate, and the paper sheet for printing preferably comprises the print layer on only one surface thereof. The paper sheet for printing may comprise the print layer on the entire surface thereof, or may comprise the print layer on only a partial region (portion) onto which printing is desirably applied.

In the present embodiment, a resin layer may be further comprised on the print layer on a surface of the paper substrate on which the print layer is provided, in order to enhance water resistance of the paper sheet for printing and allow the print layer to function as a protection layer.

A sealant layer (heat seal layer) may be comprised on an opposite surface to a surface of the paper substrate on which the print layer is provided. The sealant layer can be comprised to allow the paper sheet for printing to have heat sealing properties.

The paper substrate may be provided with a barrier layer mainly for inhibiting permeation of an oxygen gas. The barrier layer is preferably provided on an opposite surface to a surface of the paper substrate on which the print layer is provided, and, when the sealant layer is provided on the opposite surface to the surface on which the print layer is provided, the barrier layer is preferably provided between the sealant layer and the paper substrate.

The paper sheet for printing of the present embodiment may comprise one of the above layers, for example, comprise a plurality of such print layers, or may comprise a plurality of layers. The paper sheet for printing may also comprise any other layer than the above layers, for example, may also comprise a pressure-sensitive adhesion layer, an adhesion layer, or the like.

<Print layer>

The paper sheet for ultraviolet laser printing of the present embodiment comprises a print layer comprising titanium oxide, on a paper substrate. The print layer may be provided by coating or by lamination without particular limitation. In other words, the print layer is preferably a coating layer comprising titanium oxide or a laminate layer comprising titanium oxide. In the present invention, the print layer is more preferably provided by coating from the viewpoint that the print layer is easily provided on only a desired location, and from the viewpoint of ease of production. The "provided by coating" means that the print layer is formed by a coating liquid (ink composition), and encompasses a case of formation by, for example, gravure printing or ink-jet printing.

The print layer comprises titanium oxide, and the titanium oxide content in the print layer is 0.1 g/m$^2$ or more.

The titanium oxide content in the print layer is 0.1 g/m$^2$ or more, preferably 0.2 g/m$^2$ or more, more preferably 0.3 g/m$^2$ or more, further preferably 0.4 g/m$^2$ or more from the viewpoint of providing a sufficient print density, and is preferably 10 g/m$^2$ or less, more preferably 7.5 g/m$^2$ or less, further preferably 5 g/m$^2$ or less, still more preferably 3.5 g/m$^2$ or less from the viewpoint of providing a print-out spot excellent in print-out clarity with respect to one dot, from the viewpoint of leveling-off of the print density and suppression of an increase in cost due to an excessive amount of titanium oxide comprised, and from the viewpoint of suppression of the amount of smoking in ultraviolet laser irradiation (in printing).

If the titanium oxide content in the print layer is too high, smoking considered to be due to titanium oxide scattering tends to occur in ultraviolet laser irradiation. The occurrence of smoking also results in a phenomenon where discolored titanium oxide is released from the print layer, and thus print-out clarity with respect to one dot also tends to be deteriorated.

At least the printable region of the paper sheet for ultraviolet laser printing may comprise titanium oxide at the above content, and a portion where the print layer is not provided or a region where a print layer having a titanium oxide content of less than 0.1 g/m$^2$ may be present in a region where no printing is to be made. A print layer having a titanium oxide content of 0.1 g/m$^2$ or more is also preferably provided in the entire region of the paper sheet for printing from the viewpoint of simplicity of production.

In the present embodiment, the paper sheet for printing may comprise an undercoating layer not comprising titanium oxide or an undercoating layer having a titanium oxide content of less than 0.1 g/m$^2$, as a lower layer of the print layer comprising titanium oxide. In such a case, the titanium oxide content is 0.1 g/m$^2$ or more in terms of the content of the print layer comprising the lower layer in all the layers.

When a resin layer described below is comprised on the print layer, the resin layer does not correspond to the print layer.

The mass per meter square of the print layer (solid content, basis weight) is preferably 1.0 g/m$^2$ or more, more preferably 2.5 g/m$^2$ or more, further preferably 4.5 g/m$^2$ or more, and preferably 50 g/m$^2$ or less, more preferably 40 g/m$^2$ or less, further preferably 30 g/m$^2$ or less from the viewpoint of a print-out density, from the viewpoint of an enhancement in print-out clarity with respect to one dot and from the viewpoint of suppression of smoking in ultraviolet laser irradiation.

The titanium oxide content in the print layer (solid content) is preferably 0.3% by mass or more, more preferably 1.0% by mass or more, further preferably 2.0% by mass or more, still more preferably 2.5% by mass or more from the viewpoint of a print-out density and from the viewpoint of print-out clarity with respect to one dot, and preferably 95% by mass or less, more preferably 85% by mass or less, further preferably 75% by mass or less, still more preferably 60% by mass or less from the viewpoint of leveling-off of the print density and suppression of an increase in cost due to an excessive amount of titanium oxide comprised, from the viewpoint ease of formation of the print layer, and from the viewpoint of suppression of smoking in ultraviolet laser irradiation.

The thickness of the print layer is preferably 0.3 μm or more, more preferably 0.5 μm or more, further preferably 1.0 μm or more, still more preferably 2.0 μm or more from the viewpoint of print-out clarity with respect to one dot and from the viewpoint ease of formation of the print layer, and is preferably 40.0 μm or less, more preferably 30.0 μm or less, further preferably 25.0 μm or less, still more preferably 20.0 μm or less from the viewpoint of leveling-off of the print density and from the viewpoint ease of formation of the print layer.

The thickness of the print layer is measured from an observation image of a cross section of the paper sheet for printing with an electron microscope (SEM).

The substrate of the paper sheet for printing is a paper substrate as described below, and the paper substrate by itself may comprise titanium oxide. When the paper substrate comprises titanium oxide, a clearer image tends to be obtained. In particular, when the thickness of the print layer is thin, the paper substrate by itself comprises titanium oxide to result in a tendency to provide a clear image, and, in this case, when the thickness of the print layer is 2.0 μm or less, the effect by the paper substrate comprising titanium oxide tends to be remarkably exerted.

When the paper substrate comprises titanium oxide, the titanium oxide content in the paper substrate is preferably 5% by mass or more, more preferably 10% by mass or more, further preferably 15% by mass or more, still more preferably 20% by mass or more.

The print layer preferably comprises, in addition to titanium oxide, a thermoplastic resin. Any other inorganic pigment than titanium oxide may also be comprised. Hereinafter, each component will be described in detail.

(Titanium oxide)

The titanium oxide comprised in the print layer is represented by compositional formula $TiO_2$, and is also called titanium dioxide or titania.

The crystallite size of the titanium oxide in the print layer in the present embodiment is 30 nm or more. If the crystallite size of the titanium oxide in the print layer is less than 30 nm, many crystal defects are caused and recombination of electrons excited by ultraviolet laser irradiation and holes easily occurs, resulting in difficult reduction of the titanium oxide and inferior print-out clarity with respect to one dot. The crystallite size of the titanium oxide is preferably 35 nm or more, more preferably 40 nm or more.

The upper limit of the crystallite size of the titanium oxide is not particularly limited, and is preferably 60 nm or less, more preferably 56 nm or less, further preferably 53 nm or less from the viewpoint of dispersion stability in the coating liquid or in the print layer. The upper limit of the crystallite size of the titanium oxide, when falls within the above range, is preferable because dispersion stability of the titanium oxide in the coating liquid or in the print layer is favorable and print-out uniformity is enhanced.

The crystallite size of the titanium oxide is measured by a method described in Examples.

The crystallite size is determined by the Scherrer's equation, and the Bragg's angle here used is an actually measured value of the maximum intensity assigned to the 101 plane in the case of anatase-type titanium oxide, or of the maximum intensity assigned to the 110 plane in the case of rutile-type titanium oxide.

The titanium oxide may have any crystal structure, and is preferably at least one selected from the group consisting of rutile-type titanium oxide, anatase-type titanium oxide, and brookite-type titanium oxide, and is more preferably at least one selected from the group consisting of rutile-type titanium oxide and anatase-type titanium oxide, and further preferably rutile-type titanium oxide from the viewpoints of availability and stability.

The crystal shape of the titanium oxide can be determined by a known method, and can be specifically determined by, for example, analysis of a Raman spectrum or XRD pattern. For example, when the crystal shape is identified from a Raman spectrum, in general, peaks at $447 \pm 10$ cm$^{-1}$ and $609 \pm 10$ cm$^{-1}$ are observed in the case of a rutile-type and peaks at $395 \pm 10$ cm$^{-1}$, $516 \pm 10$ cm$^{-1}$, and $637 \pm 10$ cm$^{-1}$ are observed in the case of an anatase-type.

The titanium oxide may be used singly or in combinations of two or more kinds thereof.

When the titanium oxide is rutile-type titanium oxide, the diffraction angle of the titanium oxide is preferably 27.60° or less from the viewpoint of print-out clarity with respect to one dot. The Bragg's angle of rutile-type titanium oxide is originally around 27.40° (for example, 27.44°, although varies depending on documents), and the diffraction angle tends to be higher at a lower crystallinity. If the diffraction angle of the titanium oxide is more than 27.60°, crystallinity is low and discoloration is suppressed, and thus print-out clarity with respect to one dot tends to be inferior.

When the titanium oxide is rutile-type titanium oxide, the diffraction angle of the titanium oxide is preferably 27.60° or less, more preferably 27.55° or less, further preferably 27.50° or less.

The diffraction angle of the titanium oxide is, as described above, an actually measured value of the maximum intensity assigned to the 110 plane in the case of rutile type titanium oxide.

The shape of the titanium oxide is not particularly limited, and may be any of, for example, irregular, spherical, rod, and acicular shapes.

When the titanium oxide is irregular or spherical, the average particle size of the titanium oxide is not particularly limited, and is preferably 0.01 $\mu$m or more, more preferably 0.05 $\mu$m or more, further preferably 0.1 $\mu$m or more, still more preferably more than 0.15 $\mu$m, particularly preferably 0.16 $\mu$m or more, and preferably 20.0 $\mu$m or less, more preferably 5.0 $\mu$m or less, further preferably 1.5 $\mu$m or less, still more preferably 0.50 $\mu$m or less from the viewpoint of excellent print-out clarity of one dot and from the viewpoint of providing a paper sheet for printing, excellent in surface smoothness.

When the titanium oxide is acicular, the longer size of the titanium oxide is not particularly limited, and is preferably 0.1 $\mu$m or more, more preferably 0.5 $\mu$m or more, further preferably 1.5 $\mu$m or more, and preferably 50.0 $\mu$m or less, more preferably 30.0 $\mu$m or less, further preferably 15.0 $\mu$m or less from the viewpoint of excellent print-out clarity of one dot and from the viewpoint of providing a paper sheet for printing, excellent in surface smoothness. The shorter size is preferably 0.01 $\mu$m or more, more preferably 0.03 $\mu$m or more, further preferably 0.05 $\mu$m or more, and preferably 3.0 $\mu$m or less, more preferably 1.5 $\mu$m or less, further preferably 1.0 $\mu$m or less. When the titanium oxide is acicular, the aspect ratio (longer size/shorter size) is preferably 5 or more, more preferably 10 or more, further preferably 15 or more, and preferably 300 or less, more preferably 100 or less, further preferably 30 or less.

The average particle size, the longer size and the shorter size of the titanium oxide are measured by methods described in Examples. The values of the particle size, the longer size and the shorter size of the titanium oxide used as a raw material may also be adopted, or the catalogue values of the particle size, the longer size and the shorter size of the titanium oxide used as a raw material may also be adopted.

(Thermoplastic resin)

The thermoplastic resin for use in the print layer serves as a binder.

The thermoplastic resin in the print layer is not particularly limited, and when the print layer is provided by coating, coating with an aqueous coating liquid may be adopted or coating with an organic solvent-based coating liquid (oily coating liquid) may be adopted. When the print layer is provided by coating, the print layer is also referred to as "coating layer." A composition to be used for providing the coating layer is also referred to as "coating liquid" or "ink composition."

When coating with an aqueous coating liquid is adopted, the thermoplastic resin is preferably a water-dilutable thermoplastic resin. Examples of the water-dilutable resin include water-soluble, emulsion-type, and dispersion-type resins.

The water-dilutable thermoplastic resin may be any of a natural resin and a synthetic resin, and examples include a starch derivative, casein, shellac, polyvinyl alcohol and its derivative, an acrylic resin, a maleic acid-based resin, a urethane-based resin, a polyester-based resin, a styrene-butadiene-based resin, a vinyl chloride-based resin, and a polyolefin-based resin.

More specific examples of the acrylic resin include an acrylic resin obtained by copolymerization of (meth)acrylic acid with an alkyl ester thereof, styrene or the like, as monomer components, a styrene-maleic acid resin, a styrene-acrylic acid-maleic acid resin, and an olefin-(meth)acrylic acid-based copolymerized resin (for example, an ethylene-acrylic acid copolymer and an ethylene-methacrylic acid copolymer).

Among them, at least one selected from the group consisting of a starch derivative, casein, shellac, polyvinyl alcohol and its derivative, an acrylic resin, maleic acid-based resin, and a styrene-butadiene-based resin is preferable, at least one selected from the group consisting of a starch derivative, polyvinyl alcohol, a polyvinyl alcohol derivative, an acrylic resin, a maleic acid-based resin, and a styrene-butadiene-based resin is more preferable, at least one selected from the group consisting of a starch derivative, polyvinyl alcohol, a polyvinyl alcohol derivative, an acrylic resin, and a styrene-butadiene-based resin is further preferable, and at least one selected from the group consisting of polyvinyl alcohol, a polyvinyl alcohol derivative, an acrylic resin, and a styrene-butadiene-based resin is still more preferable, from the viewpoints of stability of the coating liquid and solvent resistance of the print layer.

These resins may be used singly or in combinations of two or more kinds thereof.

When an organic solvent-based coating liquid (oily coating liquid) is adopted, a known thermoplastic resin such as a cellulose-based resin (for example, nitrocellulose, cellulose acetate, cellulose acetate propionate), a polyurethane-based resin, an acrylic resin, or a vinyl chloride-copolymerized resin is preferably used.

The content of the thermoplastic resin is not particularly limited, and may be appropriately selected depending on the type of the thermoplastic resin, the contents of the titanium oxide in the coating liquid, and an inorganic pigment described below, and the like, and the content in the solid content of the coating liquid is, for example, preferably 5% by mass or more, more preferably 10% by mass or more, further preferably 15% by mass or more, and preferably 99% by mass or less, more preferably 98% by mass or less.

When the print layer is provided by coating, the coating layer is preferably provided by coating with and drying of the coating liquid.

The coating liquid is preferably an aqueous coating liquid, and examples of the aqueous medium here used include water or a mixture of water and a water-miscible solvent.

Examples of the water-miscible solvent include lower alcohols, polyhydric alcohols, and alkyl ethers or alkyl esters thereof. Specific examples include lower alcohols such as methyl alcohol, ethyl alcohol, n-propyl alcohol, and isopropyl alcohol, polyhydric alcohols such as ethylene glycol, propylene glycol, diethylene glycol, dipropylene glycol, and glycerin, as well as ethylene glycol monomethyl ether, ethylene glycol monoethyl ether, ethylene glycol monoacetate, propylene glycol monomethyl ether, propylene glycol monoethyl ether, propylene glycol monoacetate, diethylene glycol monomethyl ether, and dipropylene glycol monomethyl ether.

When an organic solvent-based coating liquid is formed, examples of the organic solvent include known solvents, for example, aromatic organic solvents such as toluene and xylene, ester-based organic solvents such as ethyl acetate, n-propyl acetate and isobutyl acetate, ketone-based organic solvents such as methyl ethyl ketone and methyl isobutyl ketone, alcohol-based organic solvents such as methanol, ethanol, isopropanol and n-butanol, and hydrocarbon-based solvents such as methylcyclohexanone.

The solid content concentration in the coating liquid is not particularly limited, and is preferably 10% by mass or more, more preferably 20% by mass or more, further preferably 30% by mass or more, and preferably 80% by mass or less, more preferably 75% by mass or less, further preferably 70% by mass or less, still more preferably 65% by mass or less, from the viewpoint of providing a desired thickness of the coating layer, from the viewpoint of allowing the coating liquid to have a viscosity facilitating coating, and from the viewpoint of ease of drying.

The viscosity of the coating liquid, as measured with a Brookfield type viscometer, is preferably 10 mPa·s (20°C) or more, more preferably 15 mPa·s (20°C) or more, further preferably 20 mPa·s (20°C) or more, and preferably 5000 mPa·s (20°C) or less, more preferably 4000 mPa·s (20°C) or less, further preferably 3000 mPa·s (20°C) or less, still more preferably 2000 mPa·s (20°C) or less, from the viewpoint of providing coating suitability, and a desired thickness of the coating layer, and from the viewpoint of ease of drying.

When the print layer is provided by lamination, a film comprising titanium oxide is preferably stacked on the substrate. When the print layer is provided by lamination, the print layer is also referred to as "laminate layer."

The thermoplastic resin constituting the laminate layer is not particularly limited as long as it can allow the titanium oxide to be included and processed into a film form, and may be appropriately selected from the group consisting of known thermoplastic resins. Specific examples thereof include polyester-based resins such as polyethylene terephthalate, polybutylene terephthalate, and polyethylene naphthalate, polyvinyl chloride, polyvinylidene chloride, polybutene, polybutadiene, an ethylene-vinyl acetate copolymer, polyolefin-based resins such as polyethylene, polypropylene, an ethylene-propylene copolymer, and polymethylpentene; polycarbonate; polyurethane; polyamide; polyacrylonitrile; and poly(meth)acrylate.

In particular, the resin constituting the laminate layer preferably comprises polyolefin such as polyethylene, polypropylene, or an ethylene-propylene copolymer, or polyester such as polyethylene terephthalate, polybutylene terephthalate, polylactic acid, or polybutylene succinate, more preferably comprises at least one selected from the group consisting of polyethylene, polypropylene, ethylene-propylene copolymer, polyethylene terephthalate, polylactic acid, and polybutylene succinate, and is further preferably at least one selected from the group consisting of polyethylene, polypropylene, an ethylene-propylene copolymer, polyethylene terephthalate, polylactic acid, and polybutylene succinate, from the viewpoints of being able to be used for a general purpose, of being high in transmittance of ultraviolet light, and of allowing for discoloration of the titanium oxide also inside the film. The resin constituting the laminate layer is still more preferably polyolefin, still more preferably at least one selected from the group consisting of polyethylene and polypropylene. Polyethylene (PE) is roughly classified into linear low-density polyethylene (LLDPE), low-density polyethylene (LDPE), medium-density polyethylene (MDPE), and high-density polyethylene (HDPE). Among them, low-density polyethylene (LDPE) is preferable because of being excellent in extrusion lamination properties.

Herein, polyester as a biodegradable resin is preferably used as the resin constituting the laminate layer in that the environmental burden is reduced, and examples thereof include polylactic acid and polybutylene succinate.

These resins may be used singly or in combinations of two or more kinds thereof.

The content of the thermoplastic resin in the laminate layer is preferably 20% by mass or more, more preferably 30% by mass or more, further preferably 50% by mass or more, still more preferably 70% by mass or more, particularly preferably 80% by mass or more, and preferably 99% by mass or less, more preferably 98% by mass or less, further preferably 95% by mass or less from the viewpoint of suppression of smoking in ultraviolet laser irradiation.

(Inorganic pigment other than titanium oxide)

The print layer may comprise any other component, in addition to the above titanium oxide and thermoplastic resin. Examples of any other component include an inorganic pigment other than the titanium oxide (hereinafter, also simply referred to as "inorganic pigment"). The inorganic pigment other than the titanium oxide is preferably comprised because titanium oxide scattering is suppressed and smoking in ultraviolet laser irradiation is suppressed, resulting in an enhancement in print-out clarity with respect to one dot.

Examples of the inorganic pigment include calcium carbonate, talc, silica, kaolin, magnesium oxide, mica, aluminum hydroxide, and barium sulfate, and in particular, at least one selected from the group consisting of calcium carbonate, talc, silica, kaolin, magnesium oxide, zinc oxide, and mica is preferable and at least one selected from the group consisting of calcium carbonate and talc is more preferable.

The inorganic pigment may be used singly or in combinations of two or more kinds thereof.

The shape of the inorganic pigment is not particularly limited, and may be any of, for example, irregular, spherical, plate, rod, and acicular shapes.

When the inorganic pigment has an irregular, spherical, or plate shape, the average particle size of the inorganic pigment is not particularly limited, and is preferably 0.1 μm or more, more preferably 0.15 μm or more, further preferably 0.20 μm or more, and preferably 10 μm or less, more preferably 5 μm or less, further preferably 3 μm or less from the viewpoint of providing a paper sheet for printing, excellent in surface smoothness, and from the viewpoint of suppression of smoking.

When the inorganic pigment is acicular, the longer size of the inorganic pigment is not particularly limited, and is preferably 0.5 μm or more, more preferably 1.0 μm or more, further preferably 2.0 μm or more, and preferably 100 μm or less, more preferably 10 μm or less, further preferably 5 μm or less from the viewpoint of providing a paper sheet for printing, excellent in surface smoothness, and from the viewpoint of suppression of smoking. The shorter size is preferably 0.1 μm or more, more preferably 0.5 μm or more, further preferably 1.0 μm or more, and preferably 50 μm or less, more preferably 10 μm or less, further preferably 1.0 μm or less. When the inorganic particle is acicular, the aspect ratio (longer size/shorter size) is preferably 1.5 or more, more preferably 2.0 or more, further preferably 3.0 or more, and preferably 100 or less, more preferably 50 or less, further preferably 30 or less.

When the print layer comprises the inorganic pigment other than the titanium oxide, the content of the inorganic pigment in the print layer is preferably 2% by mass or more, more preferably 10% by mass or more, further preferably 20% by mass or more, still more preferably 30% by mass or more, particularly preferably 50% by mass or more, and preferably 95% by mass or less, more preferably 90% by mass or less, further preferably 85% by mass or less, still more preferably 80% by mass or less from the viewpoint of an enhancement in print-out clarity with respect to one dot and from the viewpoint of suppression of smoking in ultraviolet laser irradiation.

When the print layer comprises the inorganic pigment other than the titanium oxide, the mass ratio between the titanium oxide and the inorganic pigment other than the titanium oxide (titanium oxide/inorganic pigment other than titanium oxide) is preferably 0.01 or more, more preferably 0.03 or more, further preferably 0.10 or more, and preferably 4.0 or less, more preferably 2.0 or less, further preferably 1.0 or less from the viewpoint of an enhancement in print-out clarity with respect to one dot and from the viewpoint of suppression of smoking in ultraviolet laser irradiation.

The print layer may comprise, in addition to the above components, a film-forming agent, a pigment dispersant, a pigment-dispersion resin, an anti-blocking agent, a wetting agent, a viscosity modifier, a pH adjuster, a defoamer, a common surfactant, and/or the like.

(Coating liquid)

When the print layer is provided by coating, the coating liquid (ink composition), when is an aqueous coating liquid, is preferably obtained by mixing the above materials with the aqueous medium. Here, the titanium oxide, the thermoplastic resin, water, and, if necessary, the inorganic pigment other than the titanium oxide, a water-miscible solvent, a pigment dispersant, a pigment-dispersing resin, and/or the like may be mixed and kneaded and furthermore water and, if necessary, the water-miscible solvent, and the balance of any predetermined material may be added and mixed, prior to mixing with the aqueous medium.

When the coating liquid is an oily coating liquid, an organic solvent and a resin may be mixed and then the titanium oxide and/or any other pigment than the titanium oxide may be added, or a pigment dispersant, a pigment-dispersing resin, and/or the like may be added to a mixed liquid of an organic material and a resin in advance or later.

The coating liquid is obtained by mixing and dispersing the above-mentioned respective components by a high-speed stirrer such as a homomixer or a laboratory mixer and/or a disperser such as a Cowles disperser, a triple roll mill or a bead mill.

The method for coating with the coating liquid is not particularly limited, and the substrate may be coated therewith by, for example, flexographic printing, ink-jet printing, gravure printing, screen printing, pad printing, spray coating, a Meyer bar, a gravure coater, an air knife coater, a blade coater, a rod coater, a die coater, or a bar coater.

[Laminate layer]

When the print layer is the laminate layer, a film for lamination is obtained by preparing a raw material composition in which materials, for example, at least the titanium oxide and the thermoplastic resin, and, if necessary, the inorganic pigment are molten and kneaded, and forming the composition into a film form and, if necessary, stretching such a film.

When the raw material composition is prepared, a masterbatch comprising the titanium oxide and the inorganic pigment at high concentrations may be prepared and then mixed with the resin.

The materials uniformly mixed in advance may be charged into a forming machine, or the materials may be mixed in a hopper or kneader integrated with a forming machine.

The method for forming the composition into a film form may be appropriately selected from the group consisting of conventionally known methods, and may be appropriately selected from the group consisting of, for example, a melt extrusion method, a melt casting method, and a calender method.

The substrate and the film may be attached with an adhesive layer being interposed, or are preferably laminated.

The adhesive layer is not particularly limited, and may be appropriately selected from the group consisting of known adhesive layers and then used. Specifically, a pressure-sensitive adhesive layer of JP 2012-57112 A is exemplified.

Specific examples of lamination include stacking of the paper substrate and the laminate layer by a thermal lamination method, a dry lamination method, a wet lamination method, an extrusion lamination method, or the like.

In particular, an extrusion lamination method is preferable in terms of a production step because no step of attaching the laminate layer and the paper substrate is required.

<Paper substrate>

In the present embodiment, the paper substrate is used as the substrate.

Examples of raw material pulp constituting the paper substrate include wood pulp, non-wood pulp, and deinking pulp. Examples of the wood pulp include, but not particularly limited, chemical pulp such as leaf bleached kraft pulp (LBKP), leaf unbleached kraft pulp (LUKP), needle bleached kraft pulp (NBKP), needle unbleached kraft pulp (NUKP), sulfite pulp (SP), dissolving pulp (DP), soda pulp (AP), and oxygen bleached kraft pulp (OKP), semichemical pulp such as semichemical pulp (SCP) and chemi-ground wood pulp (CGP), and mechanical pulp such as ground pulp (GP), thermomechanical pulp (TMP) and chemi-thermomechanical pulp (CTMP). Examples of the non-wood pulp include, but not particularly limited, cotton type pulp such as cotton linter and cotton lint, and non-wood type pulp such as hemp, wheat straw, bamboo and bagasse. Examples of the deinking pulp include, but not particularly limited, deinking pulp with waste paper as a raw material. The raw material pulp may be used singly or as a mixture of two or more of the above. The raw material pulp may be used as a mixture thereof with an organic synthetic fiber such as a polyamide fiber or a polyester fiber, a recycled fiber such as a polynosic fiber, or an inorganic fiber such as a glass fiber, a ceramic fiber, or a carbon fiber.

The raw material pulp is preferably any of wood pulp and deinking pulp from the viewpoint of availability. The raw material pulp is particularly wood pulp, preferably chemical pulp, more preferably kraft pulp, further preferably one or more selected from the group consisting of leaf kraft pulp of eucalyptus, acacia, and the like, and needle kraft pulp of pine, cryptomeria, and the like, still more preferably one or more selected from the group consisting of leaf bleached kraft pulp (LBKP) and needle bleached kraft pulp (NBKP), particularly preferably LBKP from the viewpoint of fiber distribution uniformity.

The length-weighted average fiber length of the pulp constituting the paper substrate is preferably 0.6 mm or more, more preferably 0.65 mm or more, further preferably 0.7 mm or more, and preferably 3.5 mm or less, more preferably 2.5 mm or less, further preferably 2.0 mm or less, still more preferably 1.5 mm or less, particularly preferably 1.0 mm or less from the viewpoints of suppression of the variation in coating and an enhancement in print-out clarity.

The length-weighted average fiber length of the pulp constituting the paper substrate is preferably equal to or less than the upper limit because pulp is mutually tightly entangled to allow a void in the paper substrate to be decreased and, in a case where the coating layer is provided, a print product is obtained which is suppressed in the variation in coating, excellent in print-out clarity with respect to one dot, and also excellent in print-out uniformity.

The length-weighted average fiber length of the pulp constituting the paper substrate is preferably equal to or more than the lower limit because the paper substrate itself is enhanced in strength and furthermore a paper powder is reduced and thus missing of a print-out part can also be suppressed.

The length-weighted average fiber length of the pulp constituting the paper substrate is measured by a method described in Examples.

The average fiber width of the pulp fiber constituting the paper substrate is preferably 14.0 $\mu$m or more, more preferably 15.0 $\mu$m or more, further preferably 15.5 $\mu$m or more, still more preferably 16.0 $\mu$m or more, and preferably 35.0 $\mu$m or less, preferably 33.0 $\mu$m or less, more preferably 31.0 $\mu$m or less, further preferably 28.0 $\mu$m or less, still more preferably 24.0 $\mu$m or less, still more preferably 21.0 $\mu$m or less.

The average fiber width of the pulp fiber constituting the paper substrate is preferably 35.0 $\mu$m or less because pulp is mutually tightly entangled to allow a surface of the paper substrate to be smoothened and, in a case where the print layer is provided, the variation in coating is suppressed and a surface of the print layer is smoothened to provide a print product excellent in print-out clarity with respect to one dot and also excellent in print-out uniformity. The average fiber width is preferably 14.0 $\mu$m or more because the paper substrate itself is enhanced in strength and furthermore a paper powder is reduced and thus missing of a print-out part can also be suppressed.

The average fiber width of the pulp fiber constituting the paper substrate can be measured by a method described in Examples.

The proportion of the number of fine fibers having a fiber length of 0.2 mm or less, in the pulp constituting the paper substrate, is preferably 4% or more, more preferably 5% or more, further preferably 6% or more, still more preferably 10% or more, particularly preferably 15% or more, and preferably 40% or less, more preferably 30% or less, further preferably 20% or less.

The proportion of the number of fine fibers is preferably 40% or less because strength of the paper substrate itself can be ensured and a paper powder due to detachment of any fine fiber is suppressed, resulting in excellent print-out uniformity. The proportion of the number of fine fibers is preferably 4% or more because any fine fiber is disposed so as to fill a gap between fibers and a void in the paper substrate is decreased, and, in a case where the coating layer is provided, the variation in coating is suppressed, resulting in an enhancement in print-out uniformity.

The proportion of the number of fine fibers having a fiber length of 0.2 mm or less, in the pulp constituting the paper substrate, is calculated by measuring the fiber length of a pulp slurry obtained by defibrating the paper substrate according to a method described in Examples, with a fiber length measurement apparatus (for example, Model FS-5 provided with UHD base unit, manufactured by Valmet K.K.). A fiber having a fiber length of 0.2 mm or less and a fiber width of 75 $\mu$m or less is defined as a fine fiber, and the proportion of the number of such fine fibers based on the number of pieces of pulp subjected to measurement is calculated.

The degree of water retention of the pulp fiber constituting the paper substrate is preferably 100% or more, more preferably 105% or more, further preferably 110% or more, still more preferably 115% or more from the viewpoint of suppression of smoking due to ultraviolet laser printing, and the upper limit is not particularly limited and is preferably 200% or less, more preferably 170% or less, further preferably 150% or less from the viewpoint of ease of production.

It is considered that the titanium oxide absorbs ultraviolet laser light to generate heat, leading to the occurrence of smoking derived from titanium oxide scattering. It is considered that the degree of water retention of the pulp constituting the paper substrate located immediately under the print layer is set to 100% or more to increase the amount of water in the paper substrate, thereby allowing the heat generated by the titanium oxide to be let out as heat of vaporization and thus allowing for suppression of titanium oxide scattering and suppression of smoking.

The degree of water retention of the pulp fiber tends to be higher when the content of hemicellulose in the pulp fiber is higher. Accordingly, when dissolving pulp which is high in content of $\alpha$-cellulose and which is decreased in content of hemicellulose is used as the raw material pulp, the degree of water retention tends to be decreased.

The degree of water retention of the pulp fiber tends to be enhanced when the degree of beating thereof is higher. Accordingly, a pulp fiber small in Canadian standard freeness (CSF) and high in degree of beating is preferably used from the viewpoint of the degree of water retention.

The degree of water retention of the pulp fiber constituting the paper substrate is measured by a method described in Examples.

The Canadian standard freeness (CSF) of the wood pulp for use in the paper substrate is preferably 150 mL or more, more preferably 300 mL or more, further preferably 400 mL or more, and preferably 800 mL or less, more preferably 750 mL or less, further preferably 700 mL or less, still more preferably 600 mL or less from the viewpoint that desired fiber width and fiber length, proportion of the number of fine fibers, and degree of water retention are obtained.

The CSF here means the Canadian standard freeness according to JIS P 8121-2:2012.

The paper substrate is obtained by papermaking with a pulp slurry to which a filling agent is, if necessary, added.

Not only the pulp, but also known filling agent(s) for papermaking, such as a loading material, a sizing agent, a dry paper strengthening agent, a wet paper strengthening agent (for example, polyamide polyamine epichlorohydrin), a yield improver (for example, aluminum sulfate), a freeness improver, a pH adjuster, a softener, an antistatic agent, a defoamer, and/or a dye/pigment can be, if necessary, added into the paper substrate.

Examples of the loading material can include kaolin, talc, titanium oxide, heavy calcium carbonate, light calcium carbonate, calcium sulfite, gypsum, fired kaolin, white carbon, amorphous silica, delaminated kaolin, diatomaceous earth, magnesium carbonate, aluminum hydroxide, calcium hydroxide, magnesium hydroxide, and zinc hydroxide.

Examples of the sizing agent include rosin-based, alkyl ketene dimer-based, alkenyl succinic anhydride-based, styrene-acrylic, higher fatty acid-based, and petroleum resin-based sizing agents.

A known wet paper machine, for example, a paper machine such as a long net paper machine, a gap former-type paper machine, a cylindrical paper machine, or a short net-type paper machine can be appropriately selected and used in papermaking of the paper substrate. Next, a paper layer formed by the paper machine is conveyed on a felt and dried by a dryer. A multi-stage cylinder dryer may also be used as a pre-dryer before drying by a dryer.

The paper substrate obtained as described above may be subjected to a surface treatment with a calender to thereby achieve uniformization of the thickness and profile and achieve an enhancement in printability. Such a calender treatment can be made by use of a known calender treatment machine appropriately selected.

The paper substrate may be appropriately selected from the group consisting of conventionally known paper substrates such as liner base paper, kraft paper, high-quality paper, coat paper, or the like, and then used.

The paper substrate may be single-layer or multi-layer, or may have a multi-layer structure having a different pulp composition.

The basis weight of the paper substrate is preferably 30 g/m$^2$ or more, more preferably 35 g/m$^2$ or more, and preferably 1000 g/m$^2$ or less, more preferably 700 g/m$^2$ or less, further preferably 500 g/m$^2$ or less from the viewpoint of enhancements in strength of the paper sheet for printing and in printability.

The basis weight is measured according to the method prescribed in JIS P 8124:2011.

The thickness of the paper substrate is not particularly limited, and is preferably 30 $\mu$m or more, more preferably 40 $\mu$m or more, further preferably 50 $\mu$m or more, and preferably 1200 $\mu$m or less, more preferably 850 $\mu$m or less, further preferably 600 $\mu$m or less from the viewpoint of enhancements in strength of the paper sheet for printing and in printability.

The thickness of the paper substrate can be measured by a method described in JIS P 8118:2014.

The density of the paper substrate is not particularly limited, and is preferably 0.3 g/cm$^3$ or more, more preferably 0.5 g/cm$^3$ or more, further preferably 0.7 g/cm$^3$ or more, and preferably 1.2 g/cm$^3$ or less, more preferably 1.0 g/cm$^3$ or less, further preferably 0.8 g/cm$^3$ or less from the viewpoint of enhancements in strength of the paper sheet for printing and in printability.

The density of the paper substrate is calculated from the basis weight and the thickness.

<Resin layer>

The paper sheet for printing of the present embodiment may further comprise a resin layer on the print layer from the viewpoint of an enhancement in water resistance of the paper sheet for printing and for the purpose of the function of the print layer as a protection layer. A paper sheet for printing, in which a resin layer is further provided on the print layer in advance, may also be used.

The total light transmittance of the resin layer is preferably 40% or more, more preferably 60% or more, further preferably 70% or more, still more preferably 80% or more, particularly preferably 90% or more, and 100% or less. The upper limit is not particularly limited.

The total light transmittance is measured according to JIS K 7361-1:1997.

The total light transmittance of the resin constituting the resin layer is preferably 40% or more and the resin is not particularly limited as long as it can be provided on a sheet substrate, and, when the resin layer and the paper substrate on which the print layer is provided are attached with an adhesive layer being interposed therebetween, or stacked by lamination, or when the resin layer on which the print layer is provided and the paper substrate are attached with an adhesive layer being interposed therebetween, the resin is preferably at least one selected from the group consisting of polyethylene, polypropylene, polyethylene terephthalate, polyvinyl alcohol, polyamide, and starch, more preferably at least one selected from the group consisting of polyethylene, polypropylene, polyethylene terephthalate, and polyvinyl alcohol, further preferably polyethylene or polypropylene, particularly preferably polyethylene from the viewpoints of transparency and ease of provision of the resin layer.

When the resin layer is provided by coating, an acrylic resin, a styrene-maleic acid resin, a water-soluble polyurethane resin, a water-soluble polyester resin, and the like are exemplified.

Examples of the acrylic resin include a resin in which (meth)acrylic acid, and any other monomer such as its alkyl ester, styrene, any other unsaturated carboxylic acid than (meth)acrylic acid, ethylene, or propylene are copolymerized, specific examples include an ethylene-(meth)acrylic acid copolymer and a styrene-acrylic acid-maleic acid resin, and an ethylene-(meth)acrylic acid copolymer is preferable.

The resin layer and the paper substrate provided with the print layer may be stacked by any method without any particular limitation, and the resin layer and the paper substrate provided with the print layer are preferably attached with an adhesive layer being interposed therebetween, laminated, or made by coating with a transparent coating material in the form of a liquid coating material from the viewpoint of ease of production. The print layer may be formed on the resin layer in advance, and the resultant may be attached to the paper substrate with an adhesive layer being interposed therebetween.

When the resin layer is locally provided, such attachment is preferably made with an adhesive being interposed, from the viewpoint of ease of production. When the resin layer is provided over a wide range, lamination is preferably made.

The adhesive layer is not particularly limited, and may be appropriately selected from the group consisting of known adhesive layers and then used. Specifically, a pressure-sensitive adhesive layer of JP 2012-57112 A is exemplified.

The thickness of the resin layer is not particularly limited, and is preferably 5 μm or more, more preferably 10 μm or more, further preferably 15 μm or more, and preferably 100 μm or less, more preferably 75 μm or less, further preferably 50 μm or less from the viewpoint of achievement of a clear print-out and from the viewpoint of handleability of the print product and the paper sheet for printing.

<Sealant layer>

The paper sheet for printing of the present embodiment may comprise a sealant layer on an opposite surface to a surface of the paper substrate on which the print layer is provided. The sealant layer is a layer which is molten by heating, ultrasonic wave, or the like and then adheres. The paper sheet for printing of the present embodiment may comprise the sealant layer on each of both surfaces of the paper substrate. The paper sheet preferably comprises the sealant layer on the top layer on at least one surface thereof or may comprise two or more of the sealant layers on one surface thereof, from the viewpoint that heat sealing properties are imparted. When the sealant layer is comprised, the sealant layer is preferably comprised at least on an opposite surface to a surface of the paper substrate on which the print layer is provided, or may also be provided on a surface of the paper substrate on which the print layer is provided.

The sealant layer may be comprised on the entire opposite surface to a surface of the paper substrate on which the print layer is provided, or may be comprised on one portion where heat sealing properties are needed.

When the sealant layer is comprised on an opposite surface to a surface of the paper substrate on which the print layer is provided, heat sealing properties are imparted and a paper sheet for printing, which has heat sealing properties, is provided. The sealant layer is preferably comprised to impart also gas barrier properties. Here, "gas barrier properties" mainly mean barrier properties to at least one selected from the group consisting of oxygen and water vapor, and may also mean barrier properties to any other gas. The paper sheet for printing of the present embodiment also preferably has at least water vapor barrier properties, and also preferably has oxygen barrier properties in addition thereto.

The resin constituting the sealant layer (hereinafter, also referred to as "resin for the sealant layer") is not particularly limited, and examples thereof include a vinyl chloride resin, a vinyl acetate resin, a vinyl chloride-vinyl acetate copolymer, an acrylic resin, a polyester resin, an olefin resin, a styrene resin, a styrene-acrylic resin (for example, styrene-acrylic acid copolymer), an ethylene-acrylic resin (ethylene-(meth)acrylic acid copolymer), and any modified product thereof. The resin for the sealant layer may be used singly or in combinations of two or more kinds thereof.

The resin for the sealant layer, here used, may be any of a synthetic product and a commercially available product, and, for example, a commercially available product used in Examples can be used.

The sealant layer may be stacked and formed by melt extrusion, an adhesive, or the like, and a method is exemplified in which a coating liquid for the sealant layer is produced to perform coating with the coating liquid. A known adhesive can be used as the adhesive. Here, two or more of the sealant layers may be formed. Here, when the sealant layer is made by laminating a resin film for the sealant layer with an adhesive or the like, the resin film may be unstretched, or uniaxially or biaxially oriented.

When the sealant layer is formed by stacking, the resin for the sealant layer, in particular, more preferably comprises at least one selected from the group consisting of a polyolefin-based resin, a polyamide resin, a polyester resin, and a polyvinylidene chloride resin, more preferably comprises a polyolefin resin, and is further preferably a polyolefin resin, from the viewpoints of heat sealing properties and gas barrier properties.

When the sealant layer is a stacked sealant layer of two or more layers, an opposite surface to a paper substrate layer preferably corresponds to a polyolefin resin layer, more preferably a polyethylene resin layer from the viewpoint of heat sealing properties.

The polyolefin resin is more preferably at least one selected from the group consisting of polyethylene, polypropylene, and an ethylene-propylene copolymer, further preferably at least one of polyethylene and polypropylene from the viewpoints of heat sealing properties and gas barrier properties.

Here, the polyethylene may be low-density polyethylene (LDPE), may be linear low-density polyethylene (LLDPE), may be medium-density polyethylene (MDPE), or may be high-density polyethylene (HDPE).

Examples of the polyamide resin include nylon 6, nylon 11, nylon 12, nylon 66, nylon 610, and nylon 612.

Examples of the polyester resin include polyethylene terephthalate (PET), polyethylene naphthalate (PEN), polybutylene terephthalate (PBT), and any derivative thereof.

Here, a biodegradable resin described below mostly corresponds to also the polyester resin.

The polyvinylidene chloride resin (PVDC) is a synthetic resin obtained by polymerizing a vinylidene group containing chlorine, and may also be a copolymer with vinyl chloride, acrylonitrile, or the like.

Examples of the biodegradable resin include polylactic acid (PLA), polybutylene succinate (PBS), polybutylene succinate adipate (PBSA), and a 3-hydroxybutanoic acid·3-hydroxyhexanoic acid copolymer (PHBH), and in particular, polylactic acid (PLA) and polybutylene succinate (PBS) are preferable and polybutylene succinate (PBS) is more preferable.

A stacked film in which two or more resins are stacked may be used as the sealant layer, and examples thereof include a polyethylene/polypropylene-stacked film, a polyamide resin/polyvinylidene chloride resin-stacked film, and a polyethylene/polyester resin-stacked film.

When an adhesive is used to attach the sealant layer and a barrier layer described below, the adhesive used is not particularly limited, and may be any of, for example, solvent-free, organic solvent-type, and aqueous adhesives, and an organic solvent-type adhesive or a solvent-free adhesive is preferably used from the viewpoint that shape stability of the paper substrate is ensured.

Examples of a main component constituting the adhesive include a (meth)acrylic acid ester copolymer, an $\alpha$-olefin copolymer, an ethylene-vinyl acetate copolymer, polyvinyl alcohol, polyurethane, a styrene-butadiene copolymer, polyvinyl chloride, an epoxy resin, a melamine resin, a silicone resin, natural rubber, casein, and starch. In particular, a (meth)acrylic acid ester copolymer, an ethylene-vinyl acetate copolymer, and polyurethane are preferable, and polyurethane is more preferable, from the viewpoint that availability and favorable adhesiveness are obtained.

A commercially available adhesive may be appropriately used as the adhesive, and examples thereof include a combination of NIPPOLAN ID-816 (manufactured by Tosoh Corporation) and HARDENER300 (manufactured by Tosoh Corporation), and a combination of DICDRY LX-500 (manufactured by DIC Corporation) and DICDRY KW-75 (manufactured by DIC Corporation).

Here, the adhesive may be applied to the sealant layer and the barrier layer and thereafter the sealant layer and the barrier layer may be stacked with the paper substrate, the adhesive may be applied to the paper substrate and thereafter the paper substrate may be stacked with the sealant layer and the barrier layer, or the adhesive may be applied to both the sealant layer and the barrier layer, and the paper substrate, and thereafter these may be stacked, without any particular limitation, and it is preferable from the viewpoint of shape stability to apply the adhesive to the sealant layer and the barrier layer and thereafter stack the paper substrate.

The method for applying the adhesive may be appropriately selected from the group consisting of conventionally known methods, and is not particularly limited, and examples include a roll coater, a die coater, a gravure coater, and a spray coater.

The amount of application of the adhesive is not particularly limited, and the amount of application (amount of coating) after drying is preferably 1 $g/m^2$ or more, more preferably 2 $g/m^2$ or more, further preferably 3 $g/m^2$ or more, and preferably 40 $g/m^2$ or less, more preferably 20 $g/m^2$ or less, further preferably 10 $g/m^2$ or less from the viewpoint of an enhancement in close contactability of the sealant layer and the barrier layer with the paper substrate layer.

When the sealant layer is formed by the coating liquid, the resin for the sealant layer is not particularly limited as long as it has heat sealing properties, and is more preferably one or more selected from the group consisting of a styrene-butadiene copolymer; olefin·unsaturated carboxylic acid-based copolymers such as an ethylene-acrylic acid copolymer and an ethylene-methacrylic acid copolymer; a biodegradable resin; polyolefin resins such as polyethylene and polypropylene; and acrylic resins such as a methyl acrylate copolymer, a methyl methacrylate copolymer, a styrene-acrylic copolymer, and a styrene-methacrylic copolymer.

In particular, one or more selected from the group consisting of a styrene-acrylic acid copolymer and olefin·unsaturated carboxylic acid-based copolymers is/are further preferable. Herein, the acrylic resin is intended not to encompass any olefin·unsaturated carboxylic acid-based copolymer.

Such an olefin·unsaturated carboxylic acid-based copolymer may also be a salt in which a carboxyl group derived from such an unsaturated carboxylic acid-based monomer is partially or fully neutralized by an alkali metal hydroxide, ammonia, alkylamine, alkanolamine, or the like.

Examples of the olefin-based monomer of such an olefin·unsaturated carboxylic acid-based copolymer include ethylene, propylene, and butadiene. These may be adopted singly, or in combinations of two or more kinds thereof. In particular, ethylene is preferable.

Examples of the unsaturated carboxylic acid-based monomer of such an olefin-unsaturated carboxylic acid-based copolymer include unsaturated carboxylic acids such as acrylic acid, methacrylic acid, crotonic acid, cinnamic acid, itaconic acid, fumaric acid, maleic acid, and butenetricarboxylic acid; unsaturated polycarboxylic acid alkyl esters each having at least one carboxyl group, such as itaconic acid monoethyl ester, fumaric acid monobutyl ester, and maleic acid monobutyl ester; and unsaturated sulfonic acid monomers or salts thereof, such as acrylamidepropanesulfonic acid, sodium sulfoethyl acrylate, and sodium sulfopropyl methacrylate. These may be used singly, or in combinations of two or more kinds thereof. In particular, unsaturated carboxylic acid is preferable, acrylic acid and methacrylic acid are more preferable, and acrylic acid is particularly preferable.

Accordingly, such an olefin·unsaturated carboxylic acid-based copolymer is preferably at least one of an ethylene-acrylic acid copolymer and an ethylene-methacrylic acid copolymer.

The ethylene·unsaturated carboxylic acid-based copolymer is preferably obtained by emulsion polymerization of ethylene and the unsaturated carboxylic acid-based monomer. The ethylene-unsaturated carboxylic acid-based copolymer is preferably an ethylene-acrylic acid copolymer or an ethylene-methacrylic acid copolymer. The copolymer may be copolymerized with a monomer of any other compound copolymerizable with ethylene and the unsaturated carboxylic acid-based monomer as long as the effects of the present invention are not impaired.

Specific examples of the ethylene·unsaturated carboxylic acid-based copolymer include ZAIKTHENE (R) A and ZAIKTHENE (R) AC (all are manufactured by Sumitomo Seika Chemicals Co., Ltd.), Chemipearl S series (manufactured by Mitsui Chemicals, Inc.), and MFHS 1279, MP498345 N, MP4983R and MP4990R (all are manufactured by Michelman Japan LLC).

The biodegradable resin is preferably one or more selected from the group consisting of polylactic acid (PLA), polybutylene succinate (PBS), polybutylene succinate adipate (PBSA), polybutylene adipate terephthalate (PBAT), and poly(3-hydroxybutyrate-co-hydroxyhexanoate) (PHBH), more preferably one or more selected from the group consisting of polylactic acid and polybutylene succinate, particularly preferably polylactic acid. A packaging material with the paper substrate has the advantage of causing reduced environmental burden as compared with a packaging material including the resin film, and use of the biodegradable resin in the sealant layer in the present embodiment can lead to a much more reduction in environmental burden.

Any of a commercially available product and a synthetic product may be used as the polylactic acid. Examples of the commercially available product include Landy PL-1000 and Landy PL-3000 (aqueous polylactic acid dispersions, manufactured by Miyoshi Oil & Fat Co., Ltd.).

When the sealant layer is provided by coating, the coating liquid for the sealant layer may comprise, in addition to the resin for the sealant layer (water-suspendable polymeric compound), a lubricant, a pigment, a defoamer, a viscosity modifier, a surfactant, a leveling agent, a colorant, and/or the like.

Such any other component tends to deteriorate heat sealing properties, and thus the total content of such any other component in the solid content of the sealant layer is preferably 30% by mass or less, more preferably 10% by mass or less, further preferably 5% by mass or less.

The content of the resin for the sealant layer in the solid content of the coating liquid for the sealant layer is preferably 50% by mass or more, more preferably 60% by mass or more, further preferably 70% by mass or more from the viewpoint that high heat seal peeling strength is obtained.

The apparatus to be used for coating with the coating liquid for the sealant layer is not particularly limited, and may be appropriately selected from the group consisting of coating apparatuses commonly used. Examples include known various coating apparatuses such as an air knife coater, a blade coater, a gravure coater, a rod blade coater, a roll coater, a reverse roll coater, a Meyer bar coater, a curtain coater, a die slot coater, a champlex coater, a metering blade-type sizepress coater, a short dwell coater, a spray coater, a gate roll coater, and a lip coater.

Drying conditions of the sealant layer are not particularly limited, and the drying temperature is preferably 50 to 120°C and the drying time is preferably 5 to 120 seconds.

The drying instrument for drying the sealant layer obtained by coating is not particularly limited, and a known instrument can be used. Examples of the drying instrument include a hot air drying machine, an infrared drying machine, an explosion-proof drying machine, and a hot plate.

The amount of application of the sealant layer is preferably 1 g/m$^2$ or more, more preferably 2 g/m$^2$ or more, and preferably 30 g/m$^2$ or less, more preferably 20 g/m$^2$ or less from the viewpoint of heat seal peeling strength. When the paper sheet for printing comprises two or more of the sealant layers, the total amount of application preferably falls within the above range.

<Barrier layer>

The paper sheet for printing of the present embodiment may further comprise the barrier layer, and may comprise the barrier layer on a surface of the paper substrate on which the print layer is provided, or on an opposite surface thereto. When the barrier layer is comprised on a surface of the paper substrate on which the print layer is provided, the barrier layer is preferably comprised between the paper substrate and the print layer. The barrier layer may be comprised on an opposite surface to the paper substrate, and, when the paper sheet for printing comprises the sealant layer, the barrier layer is preferably comprised between the paper substrate and the sealant layer.

The barrier layer is mainly a layer having a function of inhibiting permeation of an oxygen gas. The barrier layer may be formed by applying a coating liquid containing a polymeric compound selected from the group consisting of a water-suspendable polymeric compound and a water-soluble polymeric compound, may be formed by stacking a resin having barrier properties, by melt extrusion, an adhesive, or the like, may be obtained by forming a deposition layer selected from the group consisting of a deposition layer metal deposition layer and an inorganic deposition layer, or may be formed by stacking a resin film comprising a deposition layer selected from the group consisting of a metal deposition layer and an inorganic deposition layer.

(Water-suspendable polymeric compound)

The water-suspendable polymeric compound used in the barrier layer in the present embodiment is a polymeric compound having a solubility in water at 25°C, of 10 g/L or less. The water-suspendable polymeric compound in the present embodiment is preferably derived from a polymeric compound (particle) dispersed in an emulsion.

The water-suspendable polymeric compound and the water-soluble resin used in the barrier layer are not particularly limited, and examples can include a urethane-based resin, a vinylidene chloride-based resin, an olefin resin, a polyester resin, a nylon resin, an epoxy resin, melamine resin, a polyvinyl alcohol-based resin, an acrylonitrile-based resin, a polycarboxylic acid-based resin, and a silicone resin. The water-suspendable polymeric compound may be used singly or in combinations of two or more kinds thereof. In particular, the water-suspendable polymeric compound is preferably at least one selected from the group consisting of a urethane-based resin and a vinylidene chloride-based resin. The barrier layer can be formed with such a resin, and thus can exert excellent gas barrier properties (oxygen barrier properties).

The urethane-based resin can be produced by a known production method. For example, the urethane-based resin can be obtained by reaction of a polyisocyanate compound (for example, diisocyanate compound) and polyhydroxylic acid (for example, dihydroxylic acid). Alternatively, for example, the urethane-based resin can also be obtained by reaction with not only the above-mentioned polyisocyanate compound and polyhydroxylic acid, but also a polyol compound (for example, polyester polyol, polyether polyol) and/or a chain extender.

The urethane-based resin preferably contains at least one selected from the group consisting of a metaxylylene diisocyanate-derived constituent unit and a hydrogenated metaxylylene diisocyanate-derived constituent unit. Such a urethane-based resin exerts a high aggregation force by a hydrogen bond and the stacking effect of xylylene groups, and thus the barrier layer easily exerts gas barrier properties. The metaxylylene diisocyanate-derived constituent unit refers to a monomer unit in which metaxylylene diisocyanate is reacted, in the urethane-based resin. The same also applies to the hydrogenated metaxylylene diisocyanate-derived constituent unit and a polyisocyanate-derived constituent unit. The monomer unit refers to a form in which a monomer substance is reacted, in a polymer.

The total (% by mol) of the metaxylylene diisocyanate-derived constituent unit and the hydrogenated metaxylylene diisocyanate-derived constituent unit in the urethane-based resin is preferably 50% by mol or more, more preferably 60% by mol or more based on the total amount of the polyisocyanate-derived constituent unit in the urethane-based resin. The upper limit is not particularly limited, and is preferably 95% by mol or less, more preferably 90% by mol or less. The proportion (% by mol) of each constituent unit can be identified by a known procedure such as $^1$H-NMR.

The urethane-based resin may have a hydroxy group, and the hydroxyl value is preferably 50 mgKOH/g or more, more preferably 100 mgKOH/g or more, further preferably 150 mgKOH/g or more. The upper limit of the hydroxyl value is not particularly limited, and is preferably 1000 mgKOH/g or less, more preferably 800 mgKOH/g or less, further preferably 600 mgKOH/g or less. When the hydroxyl value of the urethane-based resin falls within the above range, the barrier layer easily exerts oxygen barrier properties. When the hydroxyl value of the urethane-based resin falls within the above range, heat fusibility of the barrier layer can be increased to result in an enhancement in heat sealing properties of the paper sheet for printing.

The hydroxyl value is measured according to JIS K0070-1992, and determined by measuring the number of milligrams of potassium hydroxide needed for neutralization of acetic acid bound with a hydroxyl group in acetylation of 1 g of a specimen.

The oxygen permeability at 23°C and a relative humidity of 50% in terms of a 25-μm thick sheet, of the urethane-based resin, is preferably 100.0 mL/(m$^2$·day·atm) or less, more preferably 50.0 mL/(m$^2$·day·atm) or less, further preferably 25.0 mL/(m$^2$·day·atm) or less, still more preferably 10.0 mL/(m$^2$·day·atm) or less, particularly preferably 3.0 mL/(m$^2$·day·atm) or less. The oxygen permeability at 23°C and a relative humidity of 50% in terms of a 25-μm thick sheet may be 0 mL/(m$^2$·day·atm).

The oxygen permeability in terms of a 25-μm thick sheet shows the oxygen permeability determined by forming a 25-μm thick sheet with an objective urethane-based resin and performing measurement by use of the sheet. Herein, the oxygen permeability of the above-mentioned sheet is measured with an oxygen permeability measurement apparatus (OX-TRAN2/22 manufactured by MOCON, Inc.) under conditions of 23°C and a relative humidity of 50%.

The glass transition temperature of the urethane-based resin is preferably 150°C or less, more preferably 140°C or less, particularly preferably 135°C or less. The glass transition temperature of the urethane-based resin is measured according to JIS K 7122:2012.

A synthetic product may be used as the urethane-based resin, and examples of the synthetic product can include a urethane-based resin described in WO 2015/016069. A commercially available product may also be used as the urethane-based resin, example include "Takelac W series (trade name)", "Takelac WPB series (trade name)", and "Takelac WS series (trade name)" manufactured by Mitsui Chemicals, Inc., and specific examples include Takelac WPB-341. Examples of any other commercially available product include "HPU W-003" (hydroxyl value 235 mgKOH/g) manufactured by Dainichiseika Color & Chemicals Mfg. Co., Ltd.

The vinylidene chloride-based resin can be produced by a known production method. For example, the vinylidene chloride-based resin can be obtained from a homopolymer of vinylidene chloride (polyvinylidene chloride, PVDC), or a copolymer of vinylidene chloride and a monomer copolymerizable with vinylidene chloride. Examples of the monomer copolymerizable with vinylidene chloride include, but not particularly limited, vinyl chloride, (meth)acrylic acid esters such as methyl (meth)acrylate, ethyl (meth)acrylate and butyl (meth)acrylate, acrylonitrile, isobutylene, and vinyl acetate.

A commercially available product may be used as the vinylidene chloride-based resin, and examples thereof include "Saran latex L549B" manufactured by Asahi Kasei Corporation and Diofan B204 manufactured by Solvay S.A.

The weight average molecular weight of the water-suspendable polymeric compound is preferably 1000 or more and 20000000 or less, more preferably 5000 or more and 5000000 or less. The weight average molecular weight here adopted is a polystyrene equivalent measured by gel permeation chromatography.

The average particle size of the water-suspendable polymeric compound in an emulsion is preferably 0.001 μm or more and 100 μm or less, more preferably 0.01 μm or more and 10 μm or less. The average particle size can be measured by a dynamic light scattering method.


(Water-soluble polymeric compound)


The water-soluble polymeric compound is a resin soluble in water. The resin soluble in water is a polymeric compound in which a polymer serving as a backbone has a solubility in water at 25°C, of more than 10 g/L.

Examples of the polymer serving as a backbone in the water-soluble polymeric compound include polyvinyl alcohol, modified polyvinyl alcohol, starch and its derivative, a cellulose derivative, polyvinylpyrrolidone, polyacrylic acid and any salt thereof, casein, and polyethyleneimine. In particular, the water-soluble polymeric compound is preferably one or more selected from the group consisting of polyvinyl alcohol and modified polyvinyl alcohol, more preferably modified polyvinyl alcohol from the viewpoint of an enhancement in gas barrier properties.

Examples of the modified polyvinyl alcohol include ethylene-modified polyvinyl alcohol, carboxy-modified polyvinyl alcohol, silicon-modified polyvinyl alcohol, acetoacetyl-modified polyvinyl alcohol, and diacetone-modified polyvinyl alcohol. In particular, the modified polyvinyl alcohol is preferably one or more selected from the group consisting of ethylene-modified polyvinyl alcohol, carboxy-modified polyvinyl alcohol, silicon-modified polyvinyl alcohol and acetoacetyl-modified polyvinyl alcohol, more preferably one or more selected from the group consisting of ethylene-modified polyvinyl alcohol and carboxy-modified polyvinyl alcohol, further preferably ethylene-modified polyvinyl alcohol.

The polyvinyl alcohol and the modified polyvinyl alcohol are respectively a completely saponified product or a partially saponified product, and are preferably completely saponified products. The "completely saponified" means that the degree of saponification is more than 96%. The degree of saponification is a value measured by a method according to JIS K 6726:1994.

A commercially available product may be used as the water-soluble polymeric compound, and examples of the modified polyvinyl alcohol include "Exceval (trade name)" manufactured by Kuraray Co., Ltd.

The content of the water-suspendable polymeric compound and the water-soluble polymeric compound in the barrier layer, in the solid content in the barrier layer, is preferably 10% by mass or more, more preferably 30% by mass or more, further preferably 50% by mass or more, still more preferably 60% by mass or more, and the upper limit thereof is 100% by mass from the viewpoint of an enhancement in barrier properties.

The barrier layer may be formed by coating the paper substrate with a coating liquid for the barrier layer, or the barrier layer may be formed by stacking a resin film coated with a coating liquid for the barrier layer in advance. The resin film may be the sealant layer.

When the barrier layer is formed by coating, a layered inorganic compound is preferably comprised in addition to at least one selected from the group consisting of the above-mentioned water-suspendable polymeric compound and water-soluble polymeric compound. In other words, the barrier layer preferably comprises the water-suspendable polymeric compound and the layered inorganic compound, or the water-soluble polymeric compound and the layered inorganic compound. The barrier layer can comprise the layered inorganic compound, to further enhance barrier properties (further reduce the oxygen permeability).

The average length of the layered inorganic compound is preferably 1 μm or more and 100 μm or less, more preferably 2 μm or more and 50 μm or less, further preferably 3 μm or more and 20 μm or less. The average length of the layered inorganic compound here refers to the average length of the longer axis in the planar direction of the layered inorganic compound. When the average length is 1 μm or more, the layered inorganic compound in the barrier layer is easily aligned in parallel toward the paper substrate. When the average length is 100 μm or less, a concern about protrusion of one portion of the layered inorganic compound from the barrier layer is decreased.

The aspect ratio of the layered inorganic compound is preferably 200 or more, more preferably 300 or more, further preferably 500 or more, still more preferably 800 or more. The upper limit value of the aspect ratio of the layered inorganic compound is not particularly limited, and is preferably 10000 or less, more preferably 5000 or less, further preferably 2000 or less.

When the aspect ratio of the layered inorganic compound falls within the above range, not only barrier properties are enhanced, but also the amount of coating in the barrier layer can be reduced to allow the paper sheet for printing to be enhanced in recyclability and lightweight properties.

The aspect ratio is a value which is calculated with an enlarged microphotograph of a cross section of the barrier layer and which corresponds to the average value (arithmetic average value in 20 to 30 samples) of the value obtained by dividing the length of the layered inorganic compound by the thickness thereof.

The thickness of the layered inorganic compound is preferably 100 nm or less, more preferably 50 nm or less, further preferably 30 nm or less. The lower limit value of the thickness of the layered inorganic compound is not particularly limited, and is preferably 2 nm or more. The thickness of the layered inorganic compound is here the average thickness (arithmetic average value in 20 to 30 samples) of the layered inorganic compound, as measured from an enlarged microphotograph of a cross section of the barrier layer. The thickness here is the thickness in the direction perpendicular to the longer axis of the layered inorganic compound.

When the average thickness of the layered inorganic compound falls within the above range, the number of layers stacked in the layered inorganic compound in the barrier layer is increased and therefore the barrier layer can exert higher oxygen barrier properties. In particular, the layered inorganic compound, which is large in aspect ratio and small in thickness, is used to allow a void-free and dense film to be formed as the barrier layer. This is a phenomenon which can also be observed from an enlarged microphotograph of a cross section of the barrier layer.

Specific examples of the layered inorganic compound include mica, bentonite, kaolinite (kaolin mineral, hereinafter, also referred to as "kaolin"), pyrophyllite, talc, smectite, vermiculite, chlorite, septechlorite, serpentine, stilpnomelane, and montmorillonite, in a mica group and a brittle mica group. In particular, particularly from the viewpoint of an enhancement in water vapor barrier properties, the layered inorganic compound is preferably at least one selected from the group consisting of mica, bentonite and kaolin, more preferably at least one selected from the group consisting of mica and kaolin. Examples of the mica include synthetic mica, white mica (muscovite), silk mica (sericite), bronze mica (phlogopite), black mica (biotite), fluorine phlogopite (artificial mica), red mica, soda mica, roscoelite, illite, thin mica, paragonite, and brittle mica. In particular, swellable mica is preferable as the mica because of having a high aspect ratio. Such kaolin may be a natural product or a synthesized product (engineered kaolin).

In particular, at least one selected from the group consisting of mica, bentonite and kaolin is preferable, and at least one selected from the group consisting of mica and kaolin is more preferable. When the barrier layer comprises the above layered inorganic compound, barrier properties of the paper sheet for printing under a high-humidity condition can be more effectively enhanced.

When the barrier layer comprises the layered inorganic compound, the content of the layered inorganic compound is not particularly limited, and is preferably 0.5 parts by mass or more and 500 parts by mass or less, more preferably 1 part by mass or more and 300 parts by mass or less, further preferably 2 parts by mass or more and 200 parts by mass or less, still more preferably 5 parts by mass or more and 150 parts by mass or less, particularly preferably 10 parts by mass or more and 70 parts by mass or less based on 100 parts by mass of the water-suspendable polymeric compound or the water-soluble polymeric compound in the barrier layer. When the content of the layered inorganic compound falls within the above range, barrier properties of the paper sheet for printing under a high-humidity condition can be more effectively enhanced.

The barrier layer may comprise a pigment, a dispersant, a surfactant, a defoamer, a wetting agent, a dye, a color modifier, a thickener, and/or the like, in addition to at least one selected from the group consisting of the water-suspendable polymeric compound and the water-soluble polymeric compound, and the layered inorganic compound.

When the barrier layer is provided by coating, the amount of coating in the coating liquid for the barrier layer is preferably 0.1 $g/m^2$ or more and 10 $g/m^2$ or less, more preferably 0.5 $g/m^2$ or more and 5 $g/m^2$ or less in terms of solid content.

(Resin having barrier properties)

When the barrier layer is formed by stacking a resin having barrier properties, by melt extrusion, an adhesive, or the like, the resin having barrier properties is, for example, an ethylene-vinyl alcohol copolymer (EVOH), or MX nylon.

A product sold on the market may be used as the EVOH, and examples thereof include Eval series manufactured by Kuraray Co., Ltd.

Examples of the MX nylon include MXD6 manufactured by Mitsubishi Gas Chemical Company, Inc.

(Deposition layer)

The barrier layer may be formed by directly forming a deposition layer on the paper substrate, or the barrier layer may be formed by stacking a resin film on which a deposition layer is formed.

The deposition layer is selected from the group consisting of a metal deposition layer and an inorganic deposition layer.

Examples of the metal deposited in the metal deposition layer include aluminum (Al). Examples of the inorganic compound deposited in the inorganic deposition layer can include silica(SiOx) and alumina (AlOx).

The thickness of the metal deposition layer is not particularly limited as long as desired barrier properties are obtained.

The barrier layer may be obtained by applying an adhesive to a resin film on which the deposition layer is provided, and stacking the paper substrate therewith.

Examples of the resin film include a polyester-based resin film such as polyethylene terephthalate (PET), a polyamide-based resin film such as each nylon, a polyethylene-based resin, a polypropylene-based resin, a cyclic polyolefin resin, a polystyrene-based resin, an acrylonitrile-styrene copolymer (AS resin), an acrylonitrile-butadiene-styrene copolymer (ABS resin), a polyolefin film such as a polybutene resin, a polyvinyl chloride-based resin, a polycarbonate-based resin, a polyimide-based resin, a polyamideimide-based resin, a polyallyl phthalate resin, silicone-based resin, a polysulfone-based resin, a polyphenylene sulfide-based resin, a polyethersulfone-based resin, a polyurethane-based resin, a cellulose-based resin, a poly(meth)acrylic resin, a polyvinylidene chloride film, an acetal-based resin film, and a fluorine-based resin, and in particular, a polypropylene-based resin, a polyester-based resin, or a polyamide-based resin is preferable.

[Print product and method for producing print product]

A print product of the present embodiment is a print product obtained from the above medium for ultraviolet laser printing, having a printed region comprising discolored titanium oxide in at least one portion thereof. A ratio of a Raman intensity assigned to titanium oxide in the printed region to a Raman intensity assigned to titanium oxide in a non-printed region is preferably 0.70 or less. The printed region comprising discolored titanium oxide is a region comprising titanium oxide discolored by irradiation with ultraviolet laser, and is an irradiated region with ultraviolet laser, namely, a printed region.

A method for producing a print product of the present embodiment comprises a step of performing printing by irradiation of the above-mentioned medium for printing with ultraviolet laser, and thus discoloration of an irradiated region.

Examples of the medium for printing, for use in the method for producing a print product of the present embodiment, include the above medium for printing, and also preferable ranges thereof are the same as in the above medium for printing. In the method for producing a print product of the present embodiment, at least the print layer may be provided on an irradiated region with ultraviolet laser, and no print layer may be provided in a non-irradiated region.

The irradiation with ultraviolet laser is preferably made so that the ratio between the Raman intensity assigned to titanium oxide in the printed region and the Raman intensity assigned to titanium oxide in the non-printed region is 0.70 or less.

The printed region in the print product of the present invention means a region (portion) comprising discolored titanium oxide in a printable region, and is preferably a region (portion) where printing with ultraviolet laser is applied. The non-printed region means a region (portion) where no printing is applied in a printable region. The printable region means the entire region comprising titanium oxide, obtained by combining a region in which printing by ultraviolet laser can be made and a printed region (portion), if present, which is obtained by printing with ultraviolet laser in the paper sheet for ultraviolet laser printing or print product, and the non-printable region means a region other than the printable region in the paper sheet for ultraviolet laser printing or print product.

It is preferable to make printing so that the ratio between the Raman intensity assigned to titanium oxide in the printed region and the Raman intensity assigned to titanium oxide in the non-printed region (Raman intensity in printed region/Raman intensity in non-printed region) is 0.70 or less. The Raman intensity ratio falls within the above range to thereby allow a print product excellent in viewability to be obtained.

The above-mentioned Raman intensity ratio (Raman intensity in printed region/Raman intensity in non-printed region) is as follows. When the titanium oxide used is rutile-type titanium oxide, the Raman intensity assigned to the titanium oxide is contrasted with the Raman intensity at the maximum value in the wavenumber range of $447 \pm 10$ cm$^{-1}$. When the titanium oxide used is anatase-type titanium oxide, the Raman intensity assigned to the titanium oxide is contrasted with the Raman intensity at the maximum value in the wavenumber range of $516 \pm 10$ cm$^{-1}$.

When rutile-type titanium oxide and anatase-type titanium oxide co-exist, the Raman intensity assigned to the rutile-type titanium oxide is contrasted.

It is preferably in the print product obtained in the present embodiment that the non-printed region be white and the printed region be black.

The non-printed region preferably has a color value of 10 in the Munsell color system, namely, is white. On the other hand, the printed region preferably has a color value of any of 0 to 8, more preferably 0 to 6, further preferably 0 to 4 in the Munsell color system.

It is preferable for providing the above color in the Munsell color system to appropriately adjust the titanium oxide content in the print layer in the paper sheet for printing, the crystallite size of the titanium oxide, the length-weighted average fiber length of the pulp constituting the paper substrate, other properties (for example, the type of the titanium oxide, the diffraction angle, the proportion of the number of fine fibers in the pulp constituting the paper substrate, the degree of water retention of the pulp constituting the paper substrate, the amount of compounding of the inorganic pigment, and the thickness of the print layer), and conditions of irradiation with ultraviolet laser (for example, average output, repeat frequency, and wavelength).

[Conditions of irradiation with ultraviolet laser]

The wavelength of ultraviolet laser is preferably 370 nm or less, more preferably 365 nm or less, further preferably 360 nm or less, and preferably 260 nm or more, more preferably 340 nm or more, further preferably 350 nm or more from the viewpoint of an enhancement in viewability of the printed region.

The average output of ultraviolet laser is preferably 0.3 W or more, more preferably 0.8 W or more, further preferably 1.2 W or more, still more preferably 1.8 W or more from the viewpoint of an enhancement in viewability of the printed region, and is preferably 30 W or less, more preferably 25 W or less, further preferably 20 W or less, still more preferably 15 W or less, still more preferably 10 W or less, still more preferably 6 W or less from the viewpoint of economic performance.

The repeat frequency (frequency) of ultraviolet laser is preferably 10 kHz or more, more preferably 20 kHz or more, further preferably 30 kHz or more, and preferably 100 kHz or less, more preferably 80 kHz or less, further preferably 60 kHz or less from the viewpoint of an enhancement in viewability of the printed region.

The spot size of ultraviolet laser is preferably 10 $\mu$m or more, more preferably 20 $\mu$m or more, further preferably 30 $\mu$m or more, and preferably 300 $\mu$m or less, more preferably 240 $\mu$m or less, further preferably 180 $\mu$m or less, further preferably 120 $\mu$m or less from the viewpoint of achievement of a clear image and from the viewpoint of ease of printing.

The scanning speed of ultraviolet laser is preferably 500 mm/sec or more, more preferably 1000 mm/sec or more, further preferably 2000 mm/sec or more, and preferably 7000 mm/sec or less, more preferably 6000 mm/sec or less, further preferably 5000 mm/sec or less from the viewpoints of high-speed printing and of viewability of the printed region.

The filling interval (line pitch) of ultraviolet laser is preferably 10 $\mu$m or more, more preferably 20 $\mu$m or more, further preferably 30 $\mu$m or more, and preferably 300 $\mu$m or less, more preferably 250 $\mu$m or less, further preferably 200 $\mu$m or less from the viewpoint of achievement of a clear image and from the viewpoint of availability of an apparatus.

[Aspects of method for producing print product]

The method for producing a print product of the present invention can be performed in various aspects.

Hereinafter, various aspects where the method for producing a print product of the present embodiment can be applied are exemplified, but the method for producing a print product of the present embodiment is not limited to the following aspects. The information to be printed is not particularly limited, and is preferably variable information.

The method for producing a print product of the present embodiment is preferably performed in an in-line manner.

(1) Direct printing onto package

A first embodiment of the method for producing a print product of the present embodiment relates to a method for printing information onto a package comprising the sheet for printing of the present embodiment, and the method comprises a step of performing direct printing onto the package being moved on a packaging line or being intermittently stopped, with ultraviolet laser.

In the first method for producing a print product, the package is produced by the paper sheet for ultraviolet laser printing of the present embodiment, and direct printing is applied with ultraviolet laser. At least the outermost layer of a region of the package, where printing is to be applied to the region, may be produced by the paper sheet for printing.

The package is, for example, a cardboard or a box, and it is preferable to perform direct printing onto a side surface or an upper surface of the package with ultraviolet laser.

A coating mechanism may be comprised on a packaging line. Examples of the coating mechanism include a contact print-out machine, a pad printer, and a spray coater.

In the present aspect, a step of providing the print layer by the coating mechanism during movement of the package on a packaging line, and a step of performing direct printing onto the package being moved on the packaging line or being intermittently stopped, with ultraviolet laser, in the more downstream are comprised.

(2) Printing onto label

A second embodiment of the method for producing a print product of the present embodiment relates to a method for printing information onto a label comprising the paper sheet for printing of the present embodiment. A paper sheet for printing, constituting a printing surface of the label, is the paper sheet for printing of the present embodiment.

The label onto which printing is applied is preferably attached to the package by use of a label attachment apparatus. The label attachment apparatus is any of various label attachment apparatuses proposed. The print layer is here comprised on a surface to be irradiated with ultraviolet light.

In a first label attachment apparatus, an adhesive is provided to label base paper wound in a roll shape, and then attached to an article. More specifically, there is exemplified a roll labeler comprising a cutting tool which cuts label base paper wound in a roll shape, to a predetermined length, every one sheet, a pasting conveyance tool which receives the label base paper cut by the cutting tool, by a label base paper support coated with an adhesive, and allows the adhesive to adhere to a rear surface of the label base paper, and a pasting/attaching tool which receives the label base paper (label) to which the adhesive is provided, from the pasting conveyance tool, and attaches it to an article such as a container, wherein a rotation conveyance tool having a label supporting surface on an outer surface is provided between the above cutting tool and the pasting conveyance tool. The roll labeler is exemplified in JP H6-64637 A.

There are also exemplified an aspect of a roll labeler comprising a cutting tool which cuts label base paper wound in a roll shape, to a predetermined length, every one sheet, a delivery roll that delivers the label base paper to an attachment roll, and a pasting roll that imparts a paste to the label base paper retained by the attachment roll, and such an aspect where the delivery roll is not required.

It is preferable to perform irradiation with ultraviolet laser before or after cutting of label base paper wound in a roll shape, to a predetermined length, and before delivery to the next roll or the like. A front surface or a rear surface of the label base paper wound in a roll shape corresponds to a front surface or a rear surface in attachment to the package, depending on the aspect of the roll labeler, and thus irradiation with ultraviolet laser is performed depending on the aspect.

In a second label attachment apparatus, a pressure-sensitive label roll is used as a label. In this case, the print layer is comprised on a surface to be irradiated with ultraviolet laser, which is an opposite surface to a surface to which at least a pressure-sensitive adhesive is applied.

In the case of use of a release paper-attached pressure-sensitive label roll, there is exemplified, for example, an attachment apparatus comprising a release paper separation tool which separates a pressure-sensitive label and release paper, a delivery roll which receives the pressure-sensitive label from which the release paper is separated, and an attachment roll which draws the pressure-sensitive label from the delivery roll and attaches the label to an article (package). It is preferable to perform irradiation with ultraviolet laser before separation of the release paper or after separation of the release paper and before supporting by the attachment roll.

There is also exemplified an apparatus comprising a mechanism which mounts a release paper-attached pressure-sensitive label roll and separates a pressure-sensitive label and release paper, and a mechanism which attaches the label immediately after separation, wherein printing is applied by ultraviolet laser in the lead up to separation of the release paper from the pressure-sensitive label roll mounted. The above method for attaching the pressure-sensitive label is also referred to as "unidirectional installation."

There is further exemplified a label attachment apparatus comprising a mechanism which mounts a release paper-attached pressure-sensitive label roll and separates release paper from a pressure-sensitive label, and a mechanism which attaches the pressure-sensitive label to an article (package), wherein the mechanism for attachment is a syringe system, an air-jet system, or a robot arm system. It is preferable to perform irradiation with ultraviolet laser in the lead up to separation of the release paper from the release paper-attached pressure-sensitive label roll mounted.

The label here used may be a liner-less pressure-sensitive label. The liner-less pressure-sensitive label is a label with no release paper, and is characterized by being inexpensive because the number of labels per roll is large and no release paper is present as compared with the case of use of the release paper-attached pressure-sensitive label roll. When the liner-less pressure-sensitive label is used, the print layer is formed on a surface to be irradiated with ultraviolet laser, the surface being an opposite surface to a surface to which a pressure-sensitive adhesive is to be applied.

Such a label attachment apparatus using the liner-less pressure-sensitive label is, for example, an apparatus comprising a mechanism which mounts a liner-less label roll, a cutting mechanism which cuts a liner-less label every one label, and an attachment mechanism which attaches the liner-less label cut, to an article (package), wherein the attachment mechanism is a cylinder system or a robot arm system. It is preferable to perform printing by irradiation with ultraviolet laser between the mechanism which mounts a liner-less label roll and the cutting mechanism, or in the lead up to sending of the liner-less label cut, to the attachment mechanism.

In a third label attachment apparatus, a paper sheet for printing of the present embodiment is attached to an article (package) and then printing with ultraviolet laser is performed.

The label attachment method is performed with reference to the above first apparatus and second apparatus.

(3) Printing onto pressure-sensitive adhesive tape

A third embodiment of the method for producing a print product of the present embodiment is an aspect where the paper sheet for printing is a pressure-sensitive adhesive tape. In this case, the print layer is comprised on an opposite surface to a surface to which a pressure-sensitive adhesive is applied.

In other words, the method for producing a print product of the third embodiment comprises a step of attaching a pressure-sensitive adhesive tape produced from the paper sheet for printing, to an article (package), and a step of performing printing with ultraviolet laser before the attachment step or after the attachment step.

A printing apparatus may also be used in which a printing-out apparatus with ultraviolet laser is incorporated into a cardboard sealing machine. Specifically, the apparatus comprises a mechanism which provides winding of a pressure-sensitive adhesive tape, a mechanism comprising a conveyor for conveying a cardboard, which folds a flap of a cardboard, and a mechanism which attaches the pressure-sensitive adhesive tape and seals the cardboard, and also comprises a mechanism which performs printing onto the pressure-sensitive adhesive tape with ultraviolet laser during or after attachment of the pressure-sensitive adhesive tape.

The method for producing a print product of the present embodiment is not limited to the above aspects, and can be applied to various applications where printing is demanded.

In the present embodiment, a print product obtained by the method for producing a print product is suitably used in, for example, a package, a label, or a pressure-sensitive adhesive tape.

Examples of the package include a packaging bag, a packaging box, a liquid container for beverages (preferably a liquid paper container for beverages), such as a milk carton, an aseptic paper pack, and a paper cup, and a skin pack, examples of the label include label base paper, a pressure-sensitive adhesive label, and a pressure-sensitive adhesive sheet, and examples of the pressure-sensitive adhesive tape include a pressure-sensitive adhesive tape and a kraft tape.

[Processed article]

The paper sheet for ultraviolet laser printing and the print product of the present embodiment are each applied to various processed articles. In other words, a processed article of the present embodiment is obtained with the paper sheet for ultraviolet laser printing of the present embodiment or the print product of the present embodiment.

The processed article of the present embodiment is suitably, for example, a package, a label, or a pressure-sensitive adhesive tape.

Examples of the package include liner base paper of a cardboard (in particular, liner base paper on the outermost surface), a packaging bag, a packaging box, a liquid container for beverages (preferably a liquid paper container for beverages), such as a milk carton, an aseptic paper pack, and a paper cup, a food tray, a skin pack, a pillow package, a standing pouch, and a three-side/four-side sealed package, examples of the label include label base paper, a pressure-sensitive adhesive label, and a pressure-sensitive adhesive sheet, and examples of the pressure-sensitive adhesive tape include a pressure-sensitive adhesive tape and a kraft tape.

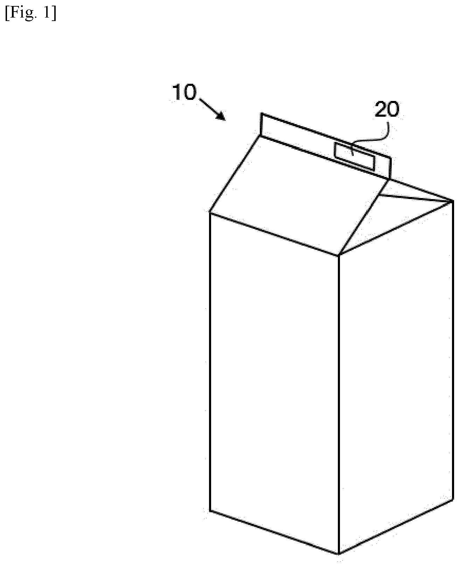

As illustrated in Fig. 1, a liquid container 10 as one package example has, for example, a printed region 20 on a surface thereof. The printed region 20 is irradiated with ultraviolet laser and thus characters such as a date are printed out on the region.

[Ink composition]

An ink composition of the present embodiment comprises titanium oxide having a crystallite size of 30 nm or more, and is used for forming a print layer to be discolored by irradiation with ultraviolet laser. A ultraviolet laser printing medium comprising the print layer formed by the ink composition of the present embodiment is subjected to printing-out by irradiation with ultraviolet laser, and thus an image excellent in print-out clarity with respect to one dot is obtained.

The titanium oxide comprised in the ink composition, and the content thereof are respectively, for example, the titanium oxide comprised in the print layer in the paper sheet for ultraviolet laser printing, and the titanium oxide content in the coating liquid, and also preferable ranges thereof are the same as in the above titanium oxide and titanium oxide content.

Any other component which may be comprised in the ink composition may be each component which may be comprised in the above coating liquid, for example, each component such as a thermoplastic resin, an inorganic pigment, a film-forming agent, a pigment dispersant, a pigment-dispersion resin, an anti-blocking agent, a wetting agent, a viscosity modifier, a pH adjuster, defoamer, and/or a common surfactant, and preferable aspects thereof are the same as preferable aspects of the above coating liquid.

Examples

Hereinafter, characteristics of the present invention are further specifically described with reference to Examples and Comparative Examples. Materials, amounts of use, proportions, treatment details, treatment procedures, and the like shown in the following Examples can be appropriately modified without departing from the gist of the present invention. Accordingly, the scope of the present invention should not be construed to be limited to specific examples shown below. Herein, "part(s)" and "%" mean "part(s) by mass" and "% by mass" respectively, unless particularly noted.

[Titanium oxide]

Each titanium oxide used in Examples and Comparative Examples is as shown in Table 1 below.

Table 1

| Type | Detail | Crystal system | Shape | Particle size (actually measured value) |
|---|---|---|---|---|
| Titanium oxide A | Article number: CR60, manufactured by Ishihara Sangyo Kaisha, Ltd. | Rutile | Irregular | 0.20 $\mu$m |
| Titanium oxide B | Article number: W-10, manufactured by Ishihara Sangyo Kaisha, Ltd. | Anatase | Irregular | 0.17 $\mu$m |
| Titanium oxide C | Testing of titanium oxide obtained by firing at 800°C in synthesis method below | Rutile | Irregular | 0.22 $\mu$m |
| Titanium oxide D | Special grade, Article number: 40982-00, manufactured by Kanto Chemical Co., Inc. | Rutile | Irregular | 0.20 $\mu$m |
| Titanium oxide E | Cica First grade, Article number: 40167-01, manufactured by Kanto Chemical Co., Inc. | Anatase | Irregular | 0.17 $\mu$m |

(continued)

| Type | Detail | Crystal system | Shape | Particle size (actually measured value) |
|---|---|---|---|---|
| Titanium oxide F | Testing of titanium oxide obtained by firing at 1100°C in synthesis method below | Rutile | Irregular | 1.13 $\mu$m |
| Titanium oxide G | Testing of titanium oxide obtained by firing at 700°C in synthesis method below | Rutile | Irregular | 0.19 $\mu$m |
| Titanium oxide H | Testing of titanium oxide obtained by firing at 600°C in synthesis method below | Rutile | Irregular | 0.18 $\mu$m |
| Titanium oxide I | Article number: Aeroxide[R] P25, manufactured by Kanto Chemical Co., Inc. | Anatase (small amount of rutile) | Irregular | 0.04 $\mu$m |
| Titanium oxide J | Article number: TTO-51(A), manufactured by Ishihara Sangyo Kaisha, Ltd. | Rutile | Irregular | 0.02 $\mu$m |

<Synthesis method of titanium oxides C, F to H>

Titanium oxide (amorphous) was synthesized by hydrolysis and condensation polymerization of titanium tetraisopropoxide (TTIP), and fired and thus crystallized.

Specifically, the synthesis was made by the following steps (1) to (6).

(1) TTIP (manufactured by Tokyo Chemical Industry Co., Ltd., product code: T0133), isopropanol (manufactured by Tokyo Chemical Industry Co., Ltd., purity: 99.5% or more, product code: 10163) and ion-exchange water were used to produce the following solutions A to C.

Solution A: 35.6 parts by mass of TTIP, 200 parts by mass of isopropanol

Solution B: 200 parts by mass of isopropanol, 6.3 parts by mass of ion-exchange water

Solution C: 200 parts by mass of isopropanol, 24.4 parts by mass of ion-exchange water

(2) Solution B was slowly dropped with stirring of solution A by a stirring blade made of Teflon (R), and thereafter the resultant was continuously stirred for 10 minutes.
(3) Solution C was slowly dropped to a mixed liquid of solution A and solution B, obtained in (2) described above, and the resultant was continuously stirred for 1 minute and then left to still stand at room temperature for 24 hours.
(4) A precipitate was collected by solid-liquid separation with a membrane filter (manufactured by Advantec Co., Ltd., material: cellulose acetate).
(5) The precipitate was washed with isopropanol and then dried at 100°C for 5 hours to provide titanium oxide (amorphous).
(6) The titanium oxide was crystallized by firing in a muffle furnace.

The firing temperature was each temperature in the Table and the temperature was raised at a rate of 10°C/min, and the firing was made over 2 hours after the temperature rise.

[Example 1-1]

<Production of paper substrate>

A pulp slurry was obtained by beating a pulp slurry of leaf bleached kraft pulp (LBKP, $\alpha$-cellulose: 86%) with a double disc refiner so that the disintegration freeness (CSF: Canadian standard freeness (Canadian standard freeness)) was 450 mL. To 100 parts of the pulp slurry obtained were added 0.30 parts (in terms of solid content) of an amphoteric polyacrylamide-based paper strengthening agent (DS4430 manufactured by Seiko PMC Corporation) as a paper strengthening agent for filling, 0.5 parts (in terms of solid content) of a rosin sizing agent (Sizepine N-811 manufactured by Arakawa Chemical Industries Ltd.) as a sizing agent for filling, and 1.0 part (in terms of solid content) of aluminum sulfate, and a paper material was prepared. The paper material was used to make paper with a Fourdrinier Yankee paper machine at a basis weight of 40 g/m$^2$. The resulting paper substrate had a basis weight of 40 g/m$^2$, a thickness of 51 $\mu$m, and a density of 0.78 g/cm$^3$.

<Preparation of coating liquid>

The solid content concentration was prepared to 68% by mixing 68 parts of titanium oxide A as a solid content as shown in Table 2, and 32 parts of ion-exchange water . Thereafter, a pigment dispersion was produced with a Coles disperser, and 3691.4 parts (1291.9 parts as a solid content) of an ethylene-acrylic emulsion (Chemipearl S-300, manufactured by Mitsui Chemicals, Inc., solid content concentration 35%) was added as an emulsion, thereby preparing a coating liquid having a solid content concentration of 35.9%. Thereafter, the solid content concentration was adjusted to 35.0% by dilution with ion-exchange water.

<Production of paper sheet for ultraviolet laser printing>

The paper substrate was coated with the coating liquid prepared as above by use of a Meyer bar so that the amount of coating of titanium oxide was each amount of coating described in Table 2, and dried in conditions of 140°C and 1 minute, to form a print layer, thereby providing a paper sheet for ultraviolet laser printing.
The print layer was applied on a surface of the paper substrate, the surface having higher smoothness.

[Examples 1-2 to 1-8, and Comparative Examples 1-1 and 1-2]

Each paper sheet for ultraviolet laser printing was obtained in the same manner as in Example 1-1 except that the titanium oxide used was changed to each titanium oxide described in Table 2, in preparation of the coating liquid.

[Example 1-9]

A paper sheet for ultraviolet laser printing was obtained in the same manner as in Example 1-4 except that the amount of addition of the ethylene-acrylic emulsion was changed to 19234.3 parts (6732.0 parts as a solid content) in preparation of the coating liquid and the paper substrate was coated so that the titanium oxide content in the print layer was a content (weight per unit area) described in Table 2.

[Example 1-10]

A paper sheet for ultraviolet laser printing was obtained in the same manner as in Example 1-4 except that the amount of addition of the ethylene-acrylic emulsion was changed to 582.9 parts (204.0 parts as a solid content) in preparation of the coating liquid and the paper substrate was coated so that the titanium oxide content in the print layer was a content (weight per unit area) described in Table 2.

[Example 1-11]

A paper sheet for ultraviolet laser printing was obtained in the same manner as in Example 1-4 except that the amount of addition of the ethylene-acrylic emulsion was changed to 237.5 parts (83.1 parts as a solid content) in preparation of the coating liquid and the paper substrate was coated so that the titanium oxide content in the print layer was a content (weight per unit area) described in Table 2.

[Example 1-12]

A paper sheet for ultraviolet laser printing was obtained in the same manner as in Example 1-4 except that the amount of addition of the ethylene-acrylic emulsion was changed to 1748.6 parts (612.0 parts as a solid content) in preparation of the coating liquid and the paper substrate was coated so that the titanium oxide content in the print layer was a content (weight per unit area) described in Table 2.

[Example 1-13]

A paper sheet for ultraviolet laser printing was obtained in the same manner as in Example 1-4 except that the amount of addition of the ethylene-acrylic emulsion was changed to 1020.0 parts (357.0 parts as a solid content) in preparation of the coating liquid and the paper substrate was coated so that the titanium oxide content in the print layer was a content (weight per unit area) described in Table 2.

[Example 1-14]

A paper sheet for ultraviolet laser printing was obtained in the same manner as in Example 1-4 except that the amount of addition of the ethylene-acrylic emulsion was changed to 9520.0 parts (3332.0 parts as a solid content) in preparation of the coating liquid and the paper substrate was coated so that the titanium oxide content in the print layer was a content (weight per unit area) described in Table 2.

[Example 1-15]

A paper sheet for ultraviolet laser printing was obtained in the same manner as in Example 1-4 except that 30 parts of leaf bleached kraft pulp (LBKP, $\alpha$-cellulose: 86%) and 70 parts of needle bleached kraft pulp (NBKP, $\alpha$-cellulose: 85%) mixed and beaten so that the disintegration freeness was 550 mL were used in production of the paper substrate.

[Example 1-16]

A paper sheet for ultraviolet laser printing was obtained in the same manner as in Example 1-4 except that 100 parts of needle bleached kraft pulp (NBKP, $\alpha$-cellulose: 86%) beaten so that the disintegration freeness was 580 mL was used in production of the paper substrate.

[Example 1-17]

A paper sheet for ultraviolet laser printing was obtained in the same manner as in Example 1-4 except that 70 parts of the same leaf bleached kraft pulp (LBKP) as in Example 1-4 and 30 parts of powder pulp produced from the LBKP, as described below, mixed and beaten so that the disintegration freeness was 400 mL were used in production of the paper substrate.

<Powder pulp>

The powder pulp was produced by mechanically pulverizing a dry sheet of the leaf bleached kraft pulp (LBKP) with a cutter mill (HA8 2542 30E manufactured by Horai Co., Ltd., screen 0.24 mm).

[Example 1-18]

Dry pulp was obtained by performing papermaking with leaf dissolving pulp (LBDP, $\alpha$-cellulose: 94%) by a pulp machine and drying in production of the paper substrate. A paper sheet for ultraviolet laser printing was obtained in the same manner as in Example 1-4 except that the dry pulp re-defibrated and beaten so that the disintegration freeness was 550 mL was used.

[Example 1-19]

A coating liquid was produced by mixing 20 parts of titanium oxide D shown in Table 2 and 70 parts of calcium carbonate (manufactured by Fimatec Ltd., article number: FMT-97 W, heavy calcium carbonate, average particle size 0.95 $\mu$m (catalogue value), irregular) as solid contents, adding 0.08 parts of sodium polyacrylate as a dispersant, and adding ion-exchange water to prepare the solid content concentration to 67.5%. Thereafter, a pigment dispersion was produced with a Coles disperser, and 10 parts of a styrene-butadiene-based latex (manufactured by NIPPON A&L INC., article number: PB5453) was added as a solid content, thereby preparing a coating liquid having a solid content concentration of 62.3%. A paper sheet for ultraviolet laser printing was obtained in the same manner as in Example 1-4 except that the paper substrate used in Example 4 was coated with the coating liquid prepared as above by an air knife coater so that the titanium oxide content in the print layer was a content (weight per unit area) described in Table 2.

[Example 1-20]

A paper sheet for ultraviolet laser printing was obtained in the same manner as in Example 1-19 except that kaolin (KAOFINE90, manufactured by Tiele Kaolin Company, plate-like particle, average particle size 0.21 μm (catalogue value)) was used instead of the calcium carbonate.

[Example 1-21]

<Method for producing masterbatch>

A masterbatch was produced by the following procedure according to JP 2015-96568 A.

A masterbatch was obtained by mixing 60 parts of a PE resin (polyethylene resin, LC522 manufactured by Japan Polyethylene Corporation) and 40 parts of titanium oxide D by a tumbler mixer (TM-65S manufactured by Eishin Co., Ltd.) in conditions of 45 rpm and 1 hour, melting and kneading the mixture by a twin-screw extruder (TEX30XCT manufactured by Japan Steel Works, Ltd., L/D = 42) in conditions of a speed of screw rotation of 250 rpm and a cylinder temperature of 200°C, extruding the mixture to thereby provide a strand, and cooling the strand in a water tank and then forming the strand into a pellet having a column shape having an average axis size of 2.0 mm and an average axis length of 3.0 mm by use of a pelletizer.

(Provision of laminate layer (film))

The masterbatch and the PE resin were loaded into a single-screw extruder (50C150 manufactured by Toyo Seiki Seisaku-sho, Ltd.) so that, in the case of formation of a 20-μm print layer, the titanium oxide content in this print layer was a value shown in Table 2, and molten and stacked on a surface of the paper substrate used in Example 1-1 by extrusion lamination so that the thickness of a laminate layer as the print layer was 20 μm, and thereafter rapidly quenched with being sandwiched by a cooling roll at a temperature regulated at 20°C, and thus a paper sheet for ultraviolet laser printing, comprising a laminate layer as a print layer, was obtained. The melting temperature was set to 320°C.

[Example 1-22]

<Preparation of coating liquid>

A coating liquid was produced by mixing 16.1 parts of titanium oxide D shown in Table 2, as a solid content, with 100 parts by mass of a gravure ink medium (manufactured by DIC Corporation, Lami CP medium, resin component: soluble nitrocellulose, solid content concentration: 24.1%), and a Coles disperser was used to produce an ink for gravure printing, having a titanium oxide concentration in the solid content of 40% by mass.

<Production of paper sheet for ultraviolet laser printing>

A gravure printer (10-color machine, plate depth: 50 μm, drying temperature after printing: 80°C, printing speed 80 m²/min) was used to perform printing onto the paper substrate of Example 1-1 so that a titanium oxide content in the Table was achieved. The titanium oxide content in the Table was here achieved with printing plates for three colors.

[Comparative Example 1-3]

<Preparation of coating liquid>

The solid content concentration was prepared to 68% by mixing 68 parts of titanium oxide D as a solid content as shown in Table 2, and 32 parts of ion-exchange water. Thereafter, a pigment dispersion was produced with a Coles disperser, and 42980 parts (15043 parts as a solid content) of an ethylene-acrylic emulsion (Chemipearl S-300, manufactured by Mitsui Chemicals, Inc., solid content concentration 35%) was added as an emulsion, thereby preparing a coating liquid having a solid content concentration of 35.9%. Thereafter, the solid content concentration was adjusted to 35.1% by dilution with ion-exchange water.

A paper sheet for ultraviolet laser printing was obtained in the same manner as in Example 1-4 except that the paper substrate was coated so that the titanium oxide content in the print layer was a content (weight per unit area) described in Table 2.

[Example 2-1]

Not only a paper substrate was produced in the same manner as in Example 1-1, but also a print layer was formed in the same manner as in Example 1-1.

<Formation of sealant layer>

PE (low-density polyethylene, Novatec (R) LD LC522 manufactured by Japan Polyethylene Corporation) was loaded into a single-screw extruder (D2025 manufactured by Toyo Seiki Seisaku-sho, Ltd.), extruded and laminated (molten and stacked) on an opposite surface to a surface of the paper substrate on which the print layer is provided so that the thickness of the resin was 15 $\mu$m, and thereafter rapidly quenched with being sandwiched by a cooling roll at a temperature regulated at 20°C, to provide a sealant layer, thereby providing a paper sheet for ultraviolet laser printing. The temperature of melting of the resin in extrusion lamination was 320°C.

[Examples 2-2 to 2-8, and Comparative Examples 2-1 and 2-2]

Each paper sheet for ultraviolet laser printing was obtained in the same manner as in Example 2-1 except that the titanium oxide used was changed to each titanium oxide described in Table 3, in preparation of the coating liquid.

[Example 2-9 to Example 2-22]

Respective paper sheets for ultraviolet laser printing were obtained in the same manner as in Example 1-9 to Example 1-22 except that sealant layers were provided as in Example 2-1.

[Example 2-23]

<Production of paper substrate, preparation of coating liquid, and formation of print layer>

A print layer was formed on a paper substrate layer in the same manner as in Example 2-4.

<Formation of sealant layer>

An isocyanate-based adhesive (1 part of DICDRY KW-75 manufactured by DIC Corporation, mixed with 10 parts of DICDRY LX-500 manufactured by DIC Corporation) was applied at 5 g/m$^2$ to a surface of a PE film (linear low-density polyethylene film (LLDPE), LL-XLTN manufactured by Futamura Chemical Co., Ltd., thickness 25 $\mu$m), and then attached with the paper substrate where the print layer was formed, thereby providing a paper sheet for ultraviolet laser printing.

[Example 2-24]

<Production of paper substrate, preparation of coating liquid, and formation of print layer>

A print layer was formed on a paper substrate layer in the same manner as in Example 2-4.

<Formation of sealant layer>

A sealant layer was formed and a paper sheet for ultraviolet laser printing was obtained in the same manner as in Example 2-4 except that PE was changed to PP (polypropylene, Novatec PP MA-3 manufactured by Mitsubishi Chemical Corporation) and the melting temperature was 330°C.

[Example 2-25]

<Production of paper substrate, preparation of coating liquid, and formation of print layer>

A print layer was formed on a paper substrate layer in the same manner as in Example 2-4.

<Formation of sealant layer>

A sealant layer was formed and a paper sheet for ultraviolet laser printing was obtained in the same manner as in Example 2-23 except that the PE film was changed to a CPP film (non-oriented polypropylene-based film, FHK2-L manufactured by Futamura Chemical Co., Ltd., thickness 25 μm). The film was a stacked film of CoPP (copolymerized polypropylene)/CoPP (copolymerized polypropylene)/Special PP, and a CoPP surface as a corona-treated surface was located to face the paper substrate.

[Example 2-26]

<Production of paper substrate, preparation of coating liquid, and formation of print layer>

A print layer was formed on a paper substrate layer in the same manner as in Example 2-4.

<Formation of sealant layer>

Water was added to an aqueous heat sealing agent (ethylene-acrylic acid copolymer (in the Table, Et-AA), MFHS 1279 manufactured by Michelman, Inc., solid content concentration 42%) to perform dilution to a solid content concentration of 20%, and the resultant was applied to an opposite surface to a surface of the paper substrate on which the print layer is provided, by use of a Meyer bar so that the amount of coating (solid content) was 5 g/m$^2$, and dried at 120°C for 60 seconds, to form a sealant layer, thereby providing a paper sheet for ultraviolet laser printing.

[Example 2-27]

<Production of paper substrate, preparation of coating liquid, and formation of print layer>

A print layer was formed on a paper substrate layer in the same manner as in Example 2-4.

<Formation of sealant layer>

A sealant layer was formed and a paper sheet for ultraviolet laser printing was obtained in the same manner as in Example 2-26 except that an aqueous heat sealing agent (ethylene-methacrylic acid copolymer (in the Table, Et-MAA), manufactured by Mitsui Chemicals, Inc., Chemipearl S-300, solid content concentration 35%) was adjusted to a solid content concentration of 20% and then used.

[Example 2-28]

<Production of paper substrate, preparation of coating liquid, and formation of print layer>

A print layer was formed on a paper substrate layer in the same manner as in Example 2-4.

<Formation of sealant layer>

A sealant layer was formed and a paper sheet for ultraviolet laser printing was obtained in the same manner as in Example 2-26 except that an aqueous heat sealing agent (styrene-acrylic acid copolymer (in the Table, St-AA), SEIKOAT RE-2016 manufactured by Seiko PMC Corporation, solid content concentration 35%) was adjusted to a solid content concentration of 20% and then used.

[Example 2-29]

<Production of paper substrate, preparation of coating liquid, and formation of print layer>

A print layer was formed on a paper substrate layer in the same manner as in Example 2-4.

<Formation of barrier layer>

EVOH (ethylene-vinyl alcohol copolymer, Eval E105B manufactured by Kuraray Co., Ltd.) was loaded into a single-screw extruder (D2025 manufactured by Toyo Seiki Seisaku-sho, Ltd.), extruded and laminated (molten and stacked) on an opposite surface to a surface of the paper substrate on which the print layer is provided, so that the thickness of the resin was 15 μm, and thereafter rapidly quenched with being sandwiched by a cooling roll at a temperature regulated at 20°C, to form a barrier layer. The temperature of melting of the resin in extrusion lamination was 215°C.

<Formation of sealant layer>

A sealant layer was formed and a paper sheet for ultraviolet laser printing was obtained in the same manner as in Example 2-4.

[Example 2-30]

<Production of paper substrate, preparation of coating liquid, and formation of print layer>

A print layer was formed on a paper substrate layer in the same manner as in Example 2-4.

<Formation of barrier layer>

A coating liquid for a barrier layer was obtained by adding 50 parts of an aqueous dispersion of a layered inorganic compound (layered inorganic compound = synthetic mica (swellable mica, average length :6.3 $\mu$m, aspect ratio: about 1000, thickness: about 5 nm), solid content concentration 6% by mass, NTO-05 manufactured by Topy Industries Limited), to 100 parts of an aqueous solution of ethylene-modified polyvinyl alcohol (completely saponified, Exceval AQ-4104, manufactured by Kuraray Co., Ltd.), having a solid content concentration of 15% by mass, and further adding dilution water thereto so that the solid content concentration was 10% by mass. After coating with the coating liquid for a barrier layer by use of a Meyer bar so that the amount of coating was 2.0 g/m$^2$, the resultant was dried in a hot air drying machine at 120°C for 1 minute, to form a barrier layer.

<Formation of sealant layer>

A sealant layer was formed and a paper sheet for ultraviolet laser printing was obtained in the same manner as in Example 2-4.

[Example 2-31]

<Production of paper substrate, preparation of coating liquid, and formation of print layer>

A print layer was formed on a paper substrate layer in the same manner as in Example 2-4.

<Formation of barrier layer>

A urethane-based emulsion (solid content concentration 30% by mass, glass transition temperature 130°C, oxygen permeability in formation of 25-$\mu$m thick sheet: 2.0 mL/(m$^2$·day·atm), Takelac WPB-341 manufactured by Mitsui Chemicals, Inc.) was added to an aqueous dispersion of a layered inorganic compound (layered inorganic compound = synthetic mica (swellable mica, average length :6.3 $\mu$m, aspect ratio: about 1000, thickness: about 5 nm), solid content concentration 6% by mass, NTO-05 manufactured by Topy Industries Limited) so that the mass ratio between the solid contents (layered inorganic compound : urethane-based resin) was 2:10, and the resultant was stirred. Dilution water was further added so that the solid content concentration was 20% by mass, and thus a coating liquid for a barrier layer was obtained. After coating with the coating liquid for a barrier layer by use of a Meyer bar so that the amount of coating in a barrier layer was 2.0 g/m$^2$, the resultant was dried in a hot air drying machine at 120°C for 1 minute, to form a barrier layer.

<Formation of sealant layer>

A sealant layer was formed and a paper sheet for ultraviolet laser printing was obtained in the same manner as in Example 2-4.

[Example 2-32]

<Production of paper substrate, preparation of coating liquid, and formation of print layer>

A print layer was formed on a paper substrate layer in the same manner as in Example 2-4.

<Formation of barrier layer>

An isocyanate-based adhesive (1 part of DICDRY KW-75 manufactured by DIC Corporation, mixed with 10 parts of DICDRY LX-500 manufactured by DIC Corporation) was applied at 5 g/m$^2$ onto a surface of a PP film of an aluminum-deposited PP film (substrate = CPP (non-oriented polypropylene film), product name: ML, manufactured by Mitsui Chemicals Tohcello, Inc., thickness 20 $\mu$m, water vapor permeability 0.2 g/m$^2$·day, oxygen permeability 50 mL/m$^2$·day·atm), and attached with an opposite surface to a surface of the paper substrate on which the print layer is provided.

<Formation of sealant layer>

A sealant layer was formed and a paper sheet for ultraviolet laser printing was obtained in the same manner as in Example 2-4.

[Example 2-33]

A paper sheet for ultraviolet laser printing was obtained in the same manner as in Example 2-32 except that an aluminum-deposited PET film (substrate =PET (polyethylene terephthalate), product name: ML, manufactured by Mitsui Chemicals Tohcello, Inc., thickness 12 $\mu$m, water vapor permeability 1 g/m$^2$·day, oxygen permeability 10 mL/m$^2$·day·atm) was used in formation of the barrier layer. The adhesive was here applied to the substrate (PET).

[Example 2-34]

A paper sheet for ultraviolet laser printing was obtained in the same manner as in Example 2-32 except that a silica-deposited PP film (substrate = PP, product name: GL-LP, manufactured by Toppan Inc., thickness 17 $\mu$m, water vapor permeability 0.5 g/m$^2$·day, oxygen permeability 1 mL/m$^2$·day·atm) was used in formation of the barrier layer. The adhesive was here applied to the substrate (PP).

[Example 2-35]

A paper sheet for ultraviolet laser printing was obtained in the same manner as in Example 2-32 except that a silica-deposited PET film (substrate = PET, product name: GL-AE, manufactured by Toppan Inc., thickness 12 $\mu$m, deposition layer thickness 400 nm, water vapor permeability 0.6 g/m$^2$·day, oxygen permeability 0.2 mL/m$^2$·day·atm) was used in formation of the barrier layer. The adhesive was here applied to the substrate (PET).

[Example 2-36]

A paper sheet for ultraviolet laser printing was obtained in the same manner as in Example 2-32 except that an alumina-deposited PET film (substrate = PET, product name: TL, manufactured by Mitsui Chemicals Tohcello, Inc., thickness 12 $\mu$m, water vapor permeability 1.5 g/m$^2$·day, oxygen permeability 15 mL/m$^2$·day·atm) was used in formation of the barrier layer. The adhesive was here applied to the substrate (PET).

[Example 2-37]

A paper sheet for ultraviolet laser printing was obtained in the same manner as in Example 2-32 except that a PET film coated with PVDC (polyvinylidene chloride) (product name: V Barrier, manufactured by Mitsui Chemicals Tohcello, Inc., thickness 12 $\mu$m, water vapor permeability 0.2 g/m$^2$·day, oxygen permeability 0.8 mL/m$^2$·day·atm) was used in formation of the barrier layer. The adhesive was here applied to the substrate (PET).

[Comparative Example 2-3]

<Preparation of coating liquid>

The solid content concentration was prepared to 68% by mixing 68 parts of titanium oxide D as a solid content as shown in Table 3, and 32 parts of ion-exchange water. Thereafter, a pigment dispersion was produced with a Coles disperser, and 42980 parts (15043 parts as a solid content) of an ethylene-acrylic emulsion (Chemipearl S-300, manufactured by Mitsui Chemicals, Inc., solid content concentration 35%) was added as an emulsion, thereby preparing a coating liquid having a solid content concentration of 35.9%. Thereafter, the solid content concentration was adjusted to 35.1% by dilution with ion-exchange water.

A paper sheet for ultraviolet laser printing was obtained in the same manner as in Example 2-4 except that the paper substrate was coated so that the titanium oxide content in the print layer was a content (weight per unit area) described in Table 3.

[Reference Example 1]

A paper sheet for ultraviolet laser printing was obtained in the same manner as in Example 2-4 except that no sealant layer was formed.

[Measurement-Evaluation]

Each of the paper substrates and each of the paper sheets for ultraviolet laser printing obtained in Examples and Comparative Examples, and various raw materials were subjected to the following measurement and evaluation.

[Method for measuring particle size of titanium oxide]

The average particle size of the titanium oxide comprised in the print layer was calculated from a SEM image (secondary electron image) of ash obtained by grinding and removing the print layer from each of the paper sheets for ultraviolet laser printing obtained in Examples and Comparative Examples, with an industrial razor (article number: 099769, manufactured by FEATHER Safety Razor Co., Ltd.), to collect the print layer as a sample, and burning the sample in a muffle furnace, the image being obtained with a scanning-type electron microscope (SEM, SU7000 or the like manufactured by Hitachi High-Tech Corporation). The ash was obtained by firing and ash-making at 450°C with a muffle furnace (Model No. FO300 manufactured by Yamato Scientific Co., Ltd.).

Here, when it is clear that no titanium oxide is comprised in any layer other than the print layer, the calculation may be performed from a SEM image of ash obtained by subjecting the paper sheet for ultraviolet laser printing, by itself, to firing and ash-making in the same manner without collection of the print layer by grinding and removal, the image being obtained with a scanning-type electron microscope.

An ash sample to be tested with a scanning-type electron microscope was produced by obtaining a 0.1% by mass slurry due to dispersion in ethanol by an ultrasonic washing machine (LSC-63 or the like manufactured by AS ONE Corporation) over 5 minutes, then casting 0.1 mL of the slurry on an aluminum dish and drying it at 100°C. Adjacent particles clearly distinguishable from each other were visually selected, and the geometric average of the longer size and the shorter size of one particle was defined as the particle size. When a primary particle and a secondary particle in an aggregated state were here clearly distinguishable from each other even if present in a mixed manner, such each particle was counted as one particle and the average size in 100 of such particles randomly selected was defined as the particle size. The magnification in SEM image observation was appropriately selected depending on the particle size of the titanium oxide, and was set to about 20000 times. When any particle other than the titanium oxide was comprised, a particle comprising a titanium element was subjected to measurement with an energy dispersive X-ray analyzer (EMAX or the like manufactured by Horiba Ltd.) attached to SEM.

When the titanium oxide was acicular, the longer size of each of 100 of such particles was measured and the average thereof was defined as the particle size.

[Method for calculating crystallite size]

<Method for preparing measurement sample>

Calculation was made from a SEM image (secondary electron image) of ash obtained by grinding and removing the print layer from each of the paper sheets for ultraviolet laser printing obtained in Examples and Comparative Examples, with an industrial razor (article number: 099769, manufactured by FEATHER Safety Razor Co., Ltd.), to collect the print layer as a sample, and burning the sample in a muffle furnace, the image being obtained with a scanning-type electron microscope (SEM, SU7000 or the like manufactured by Hitachi High-Tech Corporation). The ash was obtained by firing and ash-making at 450°C with a muffle furnace (Model No. FO300 manufactured by Yamato Scientific Co., Ltd.).

When the print layer is a laminate layer and does not comprise any other layer, the paper sheet for ultraviolet laser printing can be impregnated with an aqueous cellulase solution (Model No.: VISCAMYL FLOW, manufactured by Genencor, Inc., concentration 20% (to be used after 2-fold dilution)), and left to still stand under an environment at 40°C for 40 hours, to dissolve the paper substrate and separate the print layer. In such a case, ash may be obtained by subjecting the print layer separated, to ash-making.

<Measurement by X-ray diffraction method>

The test sample obtained by ash-making was packed in a sample holder, and subjected to measurement with a fast detector. A height regulation jig was appropriately used during filling depending on the amount of the sample so that the measurement surface of a specimen and the edge of the sample holder were the same in terms of height.

(Measurement conditions)

X-ray diffraction apparatus: RINT-Ultima III manufactured by Rigaku Corporation
Voltage: 40 kV
Current: 40 mA
Optical system: parallel beam (CBO)
Detector: fast detector D/teX Ultra 2 manufactured by Rigaku Corporation
Goniometer: Ultima III horizontal goniometer
Bulb tube: Cu
Wavelength: 1.541 Å (K$\alpha$1)
Scanning mode: CONTINUOUS
Scanning speed: 1.0000 deg/min
Step width: 0.0500 deg
Scanning axis: 2 Theta/Theta
Scanning range: 5.0000 to 60.0000 deg
Incident slit: 1.0 mm
Longitudinal restriction slit: 10 mm
Light reception slit 1: open
Light reception slit 2: open
Sample holder: ASC-6 specimen holder (article number 2455E442)

Material: aluminum

Dimension: $\varphi$23 mm $\times$ 2.0 mm

Holder height regulation jig: transparent disc-shaped plate (self-made)

Material: methyl polyacrylate
Dimension: $\varphi$23 mm $\times$ 0.8 mm

<Processing of data obtained in X-ray diffraction>

The resulting diffraction profile was subjected to background processing and profile fitting processing with integrated powder X-ray analysis software (PDXL2 manufactured by Rigaku Corporation).
All settings of data processing, not particularly mentioned, were default settings of the software.
A crystal phase was identified from information on the peak position and the peak intensity in the diffraction profile, based on the database (ICDD).

<Calculation of crystallite size based on data obtained in X-ray diffraction>

The full-width of half maximum (FWHM) and the Bragg's angle ($\theta$) in the most intense diffraction line obtained from the diffraction profile after data processing were plugged in the Scherrer's equation, and thus the crystallite size was calculated.
X-ray diffraction peaks assigned to the titanium oxide used in the calculation are as follows.

Anatase: 101 plane
Rutile: 110 plane
The Scherrer's equation is as follows.

$$D = K\lambda/B\cos\theta$$

D: Crystallite size (nm)
K: Scherrer's constant
$\lambda$: Wavelength (nm) of X-ray
B: FWHM (rad)
$\theta$: Bragg's angle (rad)

The value of K was 0.89, B was a value of FWHM obtained in measurement, the value of $\lambda$ was 0.154, and the value of $\theta$ was an actually measured value of each maximum intensity assigned to the 101 plane in the case of anatase and the 110 plane in the case of rutile.

[CSF]

The Canadian standard freeness (Canadian standard freeness; CSF) of raw material pulp was measured according to JIS P 8121-2:2012.

[Basis weight of paper substrate]

The obtained paper sheet for ultraviolet laser printing was subjected to pre-treatment in which any other layers than the paper substrate, for example, the print layer, the sealant layer, the barrier layer, and the resin layer, were ground and removed by use of a grinding apparatus (manufactured by Sagawa Manufacturing, Inc., grind stone dimension $\varphi$50.8 $\times$ 12.7 mm), with confirmation of each interface between these layers under a microscope.

Next, when the print layer, the sealant layer, the barrier layer, and the like provided by coating were comprised, some of these layers penetrated into the paper substrate and thus the paper sheet for printing, subjected to the above pre-treatment, was immersed in xylene at 100°C to elute the resin content.

The resulting paper substrate was subjected to humidity conditioning under an environment at 23°C and a humidity of 50% for one day. The basis weight of the paper substrate was measured with respect to the sample after humidity conditioning, according to JIS P 8124:2011.

[Thickness of paper substrate]

The thickness of the paper substrate was measured according to JIS P 8118:2014. The thicknesses of the print layer, the barrier layer, the heat seal layer, and the like were each calculated from a SEM image as described below, and calculated by subtraction from the value measured according to JIS P 8118:2014.

[Length-weighted average fiber length and fiber width of pulp fiber constituting paper substrate, and content of fine fiber]

The length-weighted average fiber length and the fiber width of the pulp constituting the paper substrate, and the content of the fine fiber were measured by the following methods.

Each of the mediums for printing in Examples and Comparative Examples was cut out to a 4-cm square, and about 50 times by mass of ion-exchange water was added thereto, to perform immersion for 24 hours.

After immersion for 24 hours, a standard defibrator (manufactured by Kumagai Riki Kogyo Co., Ltd.) was used for treatment until any undefibrated fiber disappeared, and thus the pulp was defibrated to provide a fiber. A slurry (pulp fiber dispersion) after removal of the sealant layer and optionally the barrier layer and the resin layer and defibration was separately taken, and a fiber length measurement machine (Model FS-5 provided with UHD base unit, manufactured by Valmet K.K.) was used to measure "Length-weighted average fiber length (ISO)", "Amount of fine fiber", and "Fiber width."

The "length-weighted average fiber length (ISO)" is the length-weighted average fiber length obtained by selection of a fiber of 0.2 mm or more and 7.6 mm or less and calculation. The "Amount of fine fiber" is the proportion of the number of fine fibers having a fiber width of 75 $\mu$m or less and having a length of 0.08 mm or more and 0.20 mm or less, among pulp fibers defibrated. The "Fiber width" is the length-weighted average fiber width calculated with selection of a fiber having a width of 10 $\mu$m or more and 75 $\mu$m or less.

[Degree of water retention]

Each of the paper sheets for ultraviolet laser printing of Examples and Comparative Examples was subjected to the following treatment as pre-treatment of measurement.

The print layer provided by coating, the sealant layer provided by coating, the barrier layer provided by coating, and the resin layer provided by coating were removed by grinding and removal with an industrial razor (article number: 099769, manufactured by FEATHER Safety Razor Co., Ltd.). When the sealant layer provided by lamination and the barrier layer provided by coating were comprised, the sealant layer and the barrier layer were removed by grinding and removal with an industrial razor (article number: 099769, manufactured by FEATHER Safety Razor Co., Ltd.) in pre-treatment. Also when the print layer provided by coating and the resin layer provided by lamination were comprised, the print layer and the laminate layer were removed by grinding and removal in the same manner.

Thereafter, ion-exchange water in an amount of about 50 times by mass the paper sheet for printing was added to the paper sheet for printing subjected to the above pre-treatment, and left to still stand for 24 hours. After such standing for 24 hours, a standard defibrator (manufactured by Kumagai Riki Kogyo Co., Ltd.) was used for treatment until any undefibrated fiber disappeared, and thus the pulp was defibrated to provide a fiber.

When the paper sheet for printing subjected to defibration treatment comprised any layer selected from the group consisting of the print layer provided by lamination, the sealant layer provided by lamination, the barrier layer provided by lamination and the resin layer provided by lamination, not removed by the pre-treatment, such a laminate layer was removed from the slurry after defibration and ion-exchange water was added to adjust the concentration to 0.5%. Ion-exchange water was added to the slurry (pulp fiber dispersion) after defibration, and the concentration was adjusted to 0.5%.

The degree of water retention of the resulting pulp fiber was measured according to JAPAN TAPPI No. 26 (2000) (pulp-method for testing degree of water retention).

[Titanium oxide content]

1. Case of non-printable region comprised in paper sheet for printing

(Production of test piece)

The printable region and the non-printable region (region with no coating layer provided) of the paper sheet for printing were each cut out to a proper size to provide a sample (test piece), and the area cut out was recorded.

(Dissolution of test piece)

A mixed solvent of nitric acid and hydrofluoric acid at 50:5 (% by volume) and the test piece were loaded into a Teflon (R) container of an autoclave apparatus (MARS5 manufactured by CEM Japan), and treated with the autoclave at 210°C for 120 minutes, thereby dissolving the test piece. The area of the test piece may be appropriately modified, and if the test piece remains without being dissolved, the ratio between nitric acid and hydrofluoric acid, the treatment temperature, the treatment time, and the like may be appropriately modified.

After the test piece was dissolved, the volume was precisely made constant with ultrapure water.

(Measurement of amount of titanium oxide in dissolution liquid)

(1) The ICP apparatus and measurement conditions were as follows.

ICP Apparatus: ICP-OEC apparatus (CIROS1-20 manufactured by Rigaku Corporation)
Measurement conditions:

· Carrier gas: argon gas
· Flow rate of argon gas 0.9 L/min
· Flow rate of plasma gas 14 L/min
· Plasma output 1400 W
· Speed of rotation of pump: 2
· Measurement wavelength (Ti): 334.941 nm

(2) Preparation of calibration curve

A universal mixed standard liquid (XSTC-622B manufactured by SPEX) was precisely weighed so that the following concentrations were each achieved, and subjected to measurement in the above-mentioned measurement conditions to thereby measure the strength at 334.941 nm corresponding to the emission wavelength of a titanium atom. · Concentrations for calibration curve preparation: 0 ppm, 0.01 ppm, 0.05 ppm, 0.1 ppm, 0.5 ppm, 1.0 ppm, 3.0 ppm, 5.0 ppm

(3) Measurement of titanium oxide content in dissolution liquid

The solution in which the test piece was dissolved was diluted with ultrapure water so as to meet the above calibration curve, and subjected to ICP measurement.

(4) Method for calculating titanium oxide content

The titanium oxide content was calculated by the following expression. Here, the Molecular weight of titanium oxide/Atomic weight of titanium almost equals to 1.669.

Titanium oxide content $(g/m^2)$ = Concentration (ppm) in ICP measurement $\times$ Dilution factor $\times$ Constant volume (L) $\times$ $1.669 \times 1000$/Area $(m^2)$

The titanium oxide content in the coating layer was determined by subtracting the titanium oxide content in the non-printable region from the titanium oxide content in the printable region.

2. Case of no non-printable region included in paper sheet for printing

(Production of test piece)

Two such paper sheets for printing were each cut out to a proper size and the area cut out was recorded.
Only a print layer was ground and removed from one of test pieces cut out, by use of a grinding apparatus (manufactured by Sagawa Manufacturing, Inc., grind stone dimension $\varphi 50.8 \times 12.7$ mm), and the resultant was adopted as a reference sample. When the resin layer was further comprised on the print layer, the resin layer was also removed in the same manner.
A cross section was appropriately observed with an electron microscope so that such grinding and removing were not so excessive.

(Subsequent treatment)

The treatment was the same as in 1., and the difference in titanium oxide content between two was defined as the titanium oxide content in the coating layer.

[Inorganic pigment content]

The inorganic pigment content was measured in the same manner as the method for measuring the titanium oxide content except that the measurement wavelength of ICP was modified to the measurement wavelength unique to a metal atom contained in each inorganic pigment. Measurement was performed at a measurement wavelength of 422.673 nm with respect to a calcium element, and at a measurement wavelength of 285.213 nm with respect to a magnesium element.

[Thickness of print layer]

The thickness of the print layer was measured from the image data obtained from a scanning-type electron microscope.

(1) Production of measurement sample

A sample was embedded in a photo-curable resin (D-800 manufactured by Toagosei Co., Ltd.), and a cross section of the medium for printing was exposed by an ultramicrotome. Grinding was performed at ordinary temperature by use of a diamond knife.

The cross section ground was subjected to gold deposition at a thickness of about 20 nm, and subjected to measurement with a scanning-type electron microscope.

(2) Measurement apparatus/conditions

Measurement apparatus: S-3600 (manufactured by Hitachi High-Tech Corporation)

Measurement conditions: magnification of 2000x,

The type of the scanning-type microscope was not limited to the above, and an apparatus displaying the scale bar was used.

If the print layer was thin, an appropriate magnification was selected and image data was acquired.

(3) Measurement method

An energy dispersive X-ray spectroscopy apparatus attached to the scanning-type electron microscope was used to confirm a titanium element comprised, from the print layer observed, and then acquire image data at a magnification of 2000x. After the resulting image data was printed onto the paper sheet for printing, the thickness of the print layer as an object (the length between boundaries with other layers) was measured by a scale, and the actual thickness of the print layer (coating layer or laminate layer) as compared with the scale bar was measured. Each image data was acquired at five positions randomly selected in one measurement sample, the thickness at a position where the print layer was the thickest and that at a position where the print layer was the thinnest were measured in the image data at one position, and the average of ten positions in total was defined as the thickness of the print layer. The observation magnification could be herein modified depending on the thickness of the print layer observed.

When the resin layer is further comprised on the print layer, the thickness of the resin layer can be measured by the same method. The thicknesses of the sealant layer and the barrier layer can also be measured in the same manner.

[Measurement of Raman spectrum]

A Raman spectrum was measured by the following method. Raman spectrum measurement in the present Examples was performed with, as an object, a print product obtained with respect to clarity of one print-out dot described below.

<Measurement conditions>

While Raman spectrum measurement conditions are as follows, the following measurement conditions, for example, the laser output and the irradiation time can be appropriately modified, for example, when any damage by the laser used for the measurement is found in the print product, when fluorescence is intense and/or when the peak intensity is low. It is noted that the Raman intensities of the printed region and the non-printed region, here adopted, are the numerical values measured under the same conditions.

· Apparatus: inVia Raman microscope QUONTOR manufactured by Renishaw plc.
· Excitation laser: 532 nm
· Laser power: 50 mW (at an output of 100%)
· Laser output: 10%
· Measurement mode: confocal mode
· Irradiation time: 2.5 sec
· Cumulated number: 50
· Laser spot size: 2.5 $\mu$m
· Objective lens: 20x

<Measurement method>

The measurements were carried out using the following method.

(1) A reference specimen (monocrystalline silicon, manufactured by Renishaw plc.) was used to perform calibration of the Raman shift position (monocrystalline silicon, 520.5 cm$^{-1}$).
(2) A sheet-like sample was installed on a stage. A holding member was, if necessary, installed so that such a sheet was kept as a flat surface.

(3) Focusing was performed in the apparatus and observation (set by a simulated laser so that the smallest focus was achieved) was performed. The printed region was observed so that a visually confirmable blackest position was at the center of a guide displayed in measurement. The non-printed region was observed with being apart by a distance of 300 $\mu$m or more from the printed region.

(4) The resulting Raman spectrum was subjected to baseline correction (intelligent correction) with processing software (Wire5.2 manufactured by Renishaw plc.) attached to the apparatus. The baseline was corrected according to polynomial expression 11 of the processing software.

(5) The respective maximum values (maximum intensities) in the wavenumber range of 447 $\pm$ 10 cm$^{-1}$ in the case of rutile-type titanium oxide and in the wavenumber range of 516 $\pm$ 10 cm$^{-1}$ in the case of anatase-type titanium oxide were read, and the Raman intensity ratio was calculated according to the following expression.

Raman intensity ratio = Peak intensity in printed region/Peak intensity in non-printed region

(6) Measurement was made at 10 positions in each of the printed region (print-out section) and the non-printed region (non-print-out section), and the average value was defined as the measurement result.

The number of counts of the Raman intensity in the printed region is preferably in the range of 10,000 or less from the viewpoint of the variation in measurement value. Accordingly, measurement conditions were appropriately modified so that the number of counts of the Raman intensity was in the range of 10,000 or less, and measurement was performed. Measurement was performed in the following measurement conditions ten times, any numerical value falling out of the average value $\pm$ 2 SD (standard deviation) was excluded, and then the average was again determined and defined as the average value of the Raman intensity.

The Raman intensity ratio was evaluated with the following A to C.

A: a Raman intensity ratio of 0.3 or less
B: a Raman intensity ratio of more than 0.3 and 0.7 or less
C: a Raman intensity ratio of more than 0.7

[Clarity of one print-out dot]

<Laser printing-out method>

A 10-mm square was printed out onto a sample surface with respect to each of the substrates obtained in Examples and Comparative Examples, by use of an ultraviolet radiator (manufacturer name: Keyence Corporation, Model No.: MD-U1020C).

(Printing-out conditions)

Wavelength: 355 nm
Output: 80% (2.5 W at an output of 100%)
Frequency: 40 kHz
Focal length: 300 mm (focusing performed by use of height correction attached to apparatus)
Spot size: 40 $\mu$m (in focusing)
Filling interval :0.3 mm
Scanning speed: :5000 mm/sec
Spot variable: 100
Only Examples 1-22 and 2-22 were carried out at an output of 40%.

<Evaluation of clarity of one print-out dot>

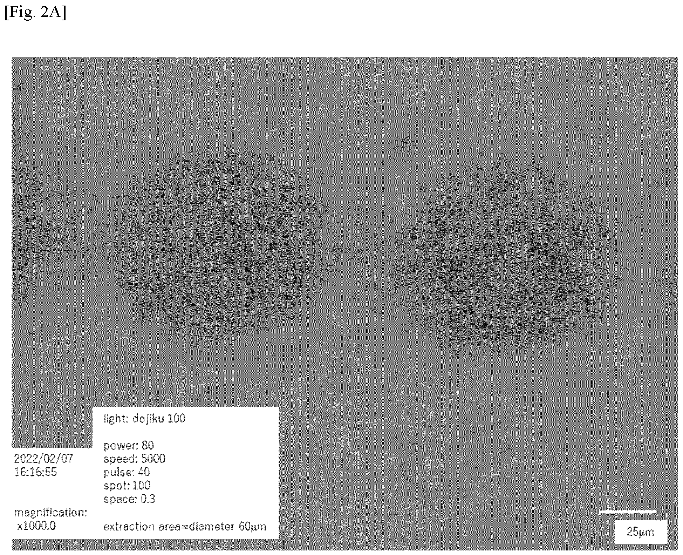

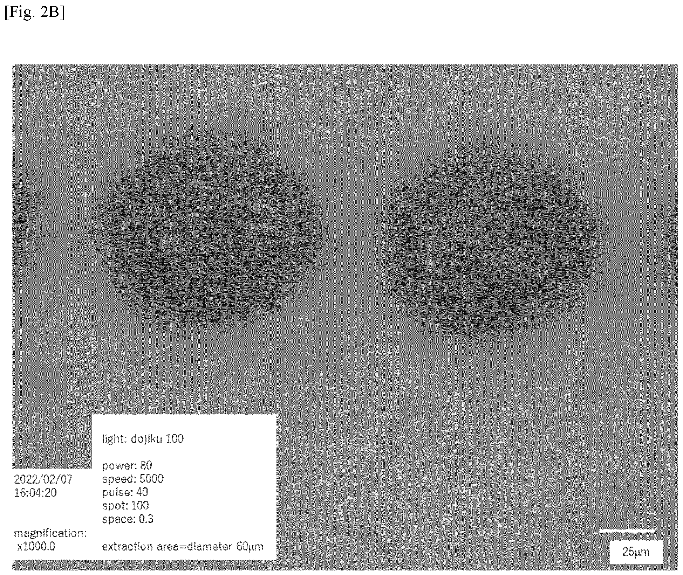

A depth composite image of the vicinity of a print-out section of an evaluation object was acquired with a digital microscope (manufacturer name: Keyence Corporation, Model No.: VHX-8000) (Fig. 2A and Fig. 2B). The depth composite image is an image constructed as one image by acquiring a plurality of images under the variation in focal length and extracting each portion in focus from the images. The depth composite image was acquired by use of a live depth composite function mounted on the digital microscope.

Fig. 2A is a depth composite image in Comparative Example 1-2 and Fig. 2B is a depth composite image in Example 1-4.

Thereafter, the area of a dark region as compared with a threshold, in a print-out section, was measured with a lightness extraction mode in an automatic area measurement function. The lightness extraction mode is a mode in which the brightness level of an image is ranked from -255 to 255 and a region at a brightness level equal to or less than any threshold is extracted. A print-out section in which a region at a brightness level less than such any threshold was more present was regarded as "deeper print-out."

(Settings in imaging)

Shutter speed: automatic mode (set value 70)
Gain: 0 dB
Magnification: 1000x
Illumination: ring illumination

(Settings of lightness extraction mode)

Magnification in acquirement of depth composite image: 1000x
Illumination: coaxial vertical illumination 100%
Shutter speed: automatic mode 70
Gain: 0 dB
Threshold: -10
Extraction region: inside a circle with a radius of 50 $\mu$m from the center of print-out section

(Evaluation criteria of depth of print-out section)

A: the area of a region at a brightness level less than -10 corresponds to 70% or more of the extraction region
B: the area of a region at a brightness level less than -10 corresponds to 65% or more and less than 70% of the extraction region
C: the area of a region at a brightness level less than -10 corresponds to 60% or more and less than 65% of the extraction region
D: the area of a region at a brightness level less than -10 corresponds to 40% or more and less than 60% of the extraction region
E: the area of a region at a brightness level less than -10 corresponds to less than 40% of the extraction region

[Print-out uniformity]

A 10-mm square was printed out onto a sample surface with respect to each of the paper sheets for ultraviolet laser printing obtained in Examples and Comparative Examples, by use of an ultraviolet radiator (manufacturer name: Keyence Corporation, Model No.: MD-U1020C).

(Printing-out conditions)

Wavelength: 355 nm
Output: 80% (2.5 W at an output of 100%)
Frequency: 40 kHz
Focal length: 300 mm (focusing performed by use of height correction attached to apparatus)
Spot size: 40 $\mu$m (in focusing)
Filling interval (line pitch): 0.05 mm

Scanning speed: 3000 mm/sec
Spot variable: -100

(Evaluation of print-out uniformity)

One hundred squares were printed out, and the print-out uniformity was evaluated with the number of squares each having a visually confirmable difference in density (print-out ununiformity) present therein.

A: a number of squares with the difference in density, of less than 3, among 100 squares
B: a number of squares with the difference in density, of 3 or more and less than 5, among 100 squares
C: a number of squares with the difference in density, of 5 or more and less than 10, among 100 squares
D: a number of squares with the difference in density, of 10 or more, among 100 squares

[Smoking properties]

The amount of smoking in printing of a square of 10 mm $\times$ 10 mm onto a sample surface by ultraviolet laser irradiation in evaluation of print-out uniformity was evaluated according to the following criteria.

(Determination criteria)

A: no visually confirmable smoking, or slightly visually confirmable smoking, but a very small amount of smoking
B: visually confirmable smoking, but a small amount of smoking
C: visually confirmable smoking, not to extent having any effect on printing-out
D: easily visually confirmable smoking, scattering of ultraviolet laser light by smoking, and a large amount of smoking having any effect on printing-out

[Water vapor barrier properties]

Each of the paper sheets for printing, provided with the sealant layer and obtained in Examples 2-1 to 2-37, Comparative Examples 2-1 to 2-3, and Reference Example 2-1, was evaluated with respect to water vapor barrier properties. Measurement was made with the sealant layer being internally located, according to a JIS-Z-0208:1976 (cup method) B method (40°C $\pm$ 0.5°C, relative humidity of 90% $\pm$ 2%).

The water vapor barrier properties were evaluated by the following evaluation criteria.

(Evaluation criteria of water vapor barrier properties)

A: a water vapor permeability of 30 g/m$^2$·day or less
B: a water vapor permeability of more than 30 g/m$^2$·day and 40 g/m$^2$·day or less
C: a water vapor permeability of more than 40 g/m$^2$·day and 50 g/m$^2$·day or less
D: a water vapor permeability of more than 50 g/m$^2$·day

Laser irradiation was performed in the following conditions, to measure the water vapor permeability of a print product by ultraviolet laser after the laser irradiation. In Reference Example 2-1, evaluation of the water vapor barrier properties before ultraviolet laser irradiation was D, and thus no measurement was performed.

<Laser irradiation>

A 10-cm square was printed out onto a sample surface (onto the print layer) with respect to each of the paper sheets for ultraviolet laser printing obtained in Examples 2-1 to 2-37 and Comparative Examples 2-1 to 2-3, in the following conditions by use of an ultraviolet radiator (manufacturer name: Keyence Corporation, Model No.: MD-U1020C).

· Printing-out conditions

Wavelength: 355 nm
Output: 80% (2.5 W at an output of 100%)
Frequency: 40 kHz
Focal length: 300 mm (focusing performed by use of height correction attached to apparatus)
Spot size: 40 μm (in focusing)
filling interval :0.04 mm
Scanning speed: 1000 mm/sec
Spot variable: 0

[Oxygen barrier properties]

The oxygen permeability of each of the paper sheets for ultraviolet laser printing, of Examples 2-29 to 2-37, was measured with an oxygen permeability measurement apparatus (OX-TRAN2/22 manufactured by MOCON, Inc.) in conditions of a temperature of 23°C and a relative humidity of 85%.

Specifically, the oxygen permeability at a temperature of 23°C and a relative humidity of 85%, of a stacked sheet, was measured according to JIS K7126-2:2006.

As the value of the oxygen permeability is lower, oxygen barrier properties are more excellent.

The oxygen barrier properties were evaluated according to the following evaluation criteria.

(Evaluation criteria of oxygen barrier properties)

A: an oxygen permeability of 3.0 mL/m$^2$·day·atm or less
B: an oxygen permeability of more than 3.0 mL/m$^2$·day·atm and 5.0 mL/m$^2$·day·atm or less
C: an oxygen permeability of more than 5.0 mL/m$^2$·day·atm and 15 mL/m$^2$·day·atm or less
D: an oxygen permeability of more than 15 mL/m$^2$·day·atm

Laser irradiation was performed in the following conditions, to measure the oxygen permeability of a print product by ultraviolet laser after the laser irradiation, in the same manner.

<Laser irradiation>

A 10-cm square was printed out onto a sample surface (onto the print layer) with respect to each of the paper sheets for ultraviolet laser printing obtained in Examples and Comparative Examples, in the following conditions by use of an ultraviolet radiator (manufacturer name: Keyence Corporation, Model No.: MD-U1020C).

· Printing-out conditions

Wavelength: 355 nm
Output: 80% (2.5 W at an output of 100%)
Frequency: 40 kHz
Focal length: 300 mm (focusing performed by use of height correction attached to apparatus)
Spot size: 40 μm (in focusing)
filling interval :0.04 mm
Scanning speed: 1000 mm/sec
Spot variable: 0

[Rate of reduction in barrier properties after ultraviolet laser irradiation (rate of reduction in barrier properties)]

The reduction in barrier properties by ultraviolet laser irradiation (rate of reduction in barrier properties) was evaluated from the water vapor permeability and the oxygen permeability before and after ultraviolet laser irradiation, according to the following evaluation criteria.

(Evaluation criteria of rate of reduction in barrier properties)

A: a rate of each reduction (rate of each decrease) in water vapor permeability and oxygen permeability, of 5.0% or less
B: a rate of reduction (rate of decrease) in water vapor permeability or oxygen permeability, of more than 5.0%

The rate of reduction in water vapor permeability is calculated as follows.
Rate of reduction in water vapor permeability = (Water vapor permeability ($g/m^2 \cdot day$) after ultraviolet laser irradiation - Water vapor permeability ($g/m^2 \cdot day$) before ultraviolet laser irradiation)/Water vapor permeability ($g/m^2 \cdot day$) before ultraviolet laser irradiation $\times$ 100
The rate of reduction in oxygen permeability is again calculated as follows.
Rate of reduction in oxygen permeability = (Oxygen permeability ($mL/m^2 \cdot day \cdot atm$) after ultraviolet laser irradiation - Oxygen permeability ($mL/m^2 \cdot day \cdot atm$) before ultraviolet laser irradiation)/Oxygen permeability ($mL/m^2 \cdot day \cdot atm$) before ultraviolet laser irradiation $\times$ 100

[Heat seal peeling strength and rate of reduction in heat seal peeling strength (rate of reduction in peeling strength)]

The paper sheets for ultraviolet laser printing, in pairs, were superimposed so that the sealant layers faced each other, and heat-sealed with a heat seal tester (TP-701-B manufactured by Tester Sangyo Co., Ltd.) in conditions of 160°C, 0.2 MPa, and 1 second. A test piece heat-sealed was left to still stand in a room at a temperature of 23°C ± 1°C and a humidity of 50% ± 2% for 4 hours or more. Subsequently, the test piece heat-sealed was cut to a width of 15 mm, and subjected to T-shaped peeling at a tensile speed of 300 mm/min by use of a tensile tester, and the maximum load recorded was defined as the heat seal peeling strength.
The heat seal peeling strength was evaluated according to the following evaluation criteria.

(Evaluation criteria of heat seal peeling strength)

A: a heat seal peeling strength of 10 N/15 mm or more
B: a heat seal peeling strength of 6.0 N/15 m or more and less than 10 N/15 mm
C: a heat seal peeling strength of 3.0 N/15 mm or more and less than 6.0 N/15 mm
D: a heat seal peeling strength of less than 3.0 N/15 mm

<Laser irradiation>

A 10-cm square was printed out onto a sample surface (onto the print layer) with respect to each of the paper sheets for ultraviolet laser printing obtained in Examples and Comparative Examples, in the following conditions by use of an ultraviolet radiator (manufacturer name: Keyence Corporation, Model No.: MD-U1020C).

· Printing-out conditions

Wavelength: 355 nm
Output: 80% (2.5 W at an output of 100%)
Frequency: 40 kHz
Focal length: 300 mm (focusing performed by use of height correction attached to apparatus)
Spot size: 40 $\mu$m (in focusing)
Filling interval :0.04 mm
Scanning speed: 1000 mm/sec
Spot variable: 0

(Evaluation criteria of rate of reduction in heat seal peeling strength)

The reduction in barrier properties by ultraviolet laser irradiation (rate of reduction in barrier properties) was evaluated from the heat seal peeling strength before and after ultraviolet laser irradiation, according to the following evaluation criteria. In Comparative Example 2-4, evaluation of the heat seal peeling strength before ultraviolet laser irradiation was D, and thus no measurement was performed.

(Evaluation criteria of rate of reduction in heat seal peeling strength)

A: a rate of reduction in heat seal peeling strength (rate of decrease) of 5.0% or less
B: a rate of reduction in heat seal peeling strength (rate of decrease) of more than 5.0%

The rate of reduction in heat seal peeling strength was calculated as follows.

Rate of reduction in heat seal peeling strength = (Heat seal peeling strength (N/15 mm) before ultraviolet laser irradiation - Heat seal peeling strength (N/15 mm) before ultraviolet laser irradiation)/Heat seal peeling strength (N/15 mm) before ultraviolet laser irradiation $\times$ 100

Table 2

| | | | Titanium oxide Print layer Paper layer | | | | | | | | Raman intensity ratio | Clarity of one print-out dot | Print-out uniformity | Smoking properties |
| | Type | Crystal system | Crystallite size | Diffraction angle | Titanium oxide content | Thickness | Length-weighted average fiber length | Fiber width | Amount of fine fiber | Degree of water retention | | | | |
| | | | nm | ° | g/m$^2$ | μm | mm | μm | % | % | | | | |
| Example 1-1 | A | Rutile | 36.9 | 27.41 | 0.5 | 9.0 | 0.74 | 17.6 | 17.2 | 119 | A | C | A | B |
| Example 1-2 | B | Anatase | 41.8 | 25.22 | 0.5 | 9.0 | 0.74 | 17.6 | 17.2 | 119 | A | B | A | B |
| Example 1-3 | C | Rutile | 44.9 | 27.48 | 0.5 | 9.0 | 0.74 | 17.6 | 17.2 | 119 | A | A | A | B |
| Example 1-4 | D | Rutile | 48.0 | 27.40 | 0.5 | 9.0 | 0.74 | 17.6 | 17.2 | 119 | A | A | A | B |
| Example 1-5 | E | Anatase | 51.3 | 25.29 | 0.5 | 9.0 | 0.74 | 17.6 | 17.2 | 119 | A | A | B | B |
| Example 1-6 | F | Rutile | 55.3 | 27.40 | 0.5 | 9.0 | 0.74 | 17.6 | 17.2 | 119 | A | B | C | B |
| Example 1-7 | G | Rutile | 43.2 | 27.60 | 0.5 | 9.0 | 0.74 | 17.6 | 17.2 | 119 | A | B | B | B |
| Example 1-8 | H | Rutile | 42.9 | 27.74 | 0.5 | 9.0 | 0.74 | 17.6 | 17.2 | 119 | A | D | B | B |
| Example 1-9 | D | Rutile | 48.0 | 27.40 | 0.1 | 9.3 | 0.74 | 17.6 | 17.2 | 119 | A | D | B | A |
| Example 1-10 | D | Rutile | 48.0 | 27.40 | 2.4 | 7.9 | 0.74 | 17.6 | 17.2 | 119 | A | A | B | C |
| Example 1-11 | D | Rutile | 48.0 | 27.40 | 4.2 | 6.9 | 0.74 | 17.6 | 17.2 | 119 | A | C | C | D |
| Example 1-12 | D | Rutile | 48.0 | 27.40 | 0.5 | 4.8 | 0.74 | 17.6 | 17.2 | 119 | A | B | B | C |
| Example 1-13 | D | Rutile | 48.0 | 27.40 | 0.5 | 2.6 | 0.74 | 17.6 | 17.2 | 119 | A | C | B | C |
| Example 1-14 | D | Rutile | 48.0 | 27.40 | 0.5 | 24.1 | 0.74 | 17.6 | 17.2 | 119 | A | A | A | B |
| Example 1-15 | D | Rutile | 48.0 | 27.40 | 0.5 | 9.0 | 1.80 | 26.8 | 22.7 | 134 | A | B | B | B |
| Example 1-16 | D | Rutile | 48.0 | 27.40 | 0.5 | 9.0 | 1.98 | 31.2 | 32.3 | 142 | A | C | C | B |
| Example 1-17 | D | Rutile | 48.0 | 27.40 | 0.5 | 9.0 | 0.67 | 17.6 | 35.0 | 145 | A | A | B | B |
| Example 1-18 | D | Rutile | 48.0 | 27.40 | 0.5 | 9.0 | 0.74 | 17.6 | 6.0 | 102 | A | A | A | C |
| Example 1-19 | D | Rutile | 48.0 | 27.40 | 0.5 | 9.0 | 0.74 | 17.6 | 17.2 | 119 | A | A | A | A |
| Example 1-20 | D | Rutile | 48.0 | 27.40 | 0.5 | 9.0 | 0.74 | 17.6 | 17.2 | 119 | A | A | A | A |
| Example 1-21 | D | Rutile | 40.7 | 27.46 | 0.9 | 20.0 | 0.74 | 17.6 | 17.2 | 119 | A | A | B | B |

(continued)

| | | | Titanium oxide Print layer Paper layer | | | | | | | | Raman intensity ratio | Clarity of one print-out dot | Print-out uniformity | Smoking properties |
|---|---|---|---|---|---|---|---|---|---|---|---|---|---|---|
| | Type | Crystal system | Crystallite size | Diffraction angle | Titanium oxide content | Thickness | Length-weighted average fiber length | Fiber width | Amount of fine fiber | Degree of water retention | | | | |
| | | | nm | ° | g/m$^2$ | $\mu$m | mm | $\mu$m | % | % | | | | |
| Example 1-22 | D | Rutile | 48.0 | 27.40 | 1.5 | 1.0 | 0.74 | 17.6 | 17.2 | 119 | A | C | C | C |
| Comparative Example 1-1 | I | Anatase | 20.1 | 25.28 | 0.5 | 9.0 | 0.74 | 17.6 | 17.2 | 119 | B | E | B | B |
| Comparative Example 1-2 | J | Rutile | 11.2 | 27.46 | 0.5 | 9.0 | 0.74 | 17.6 | 17.2 | 119 | B | E | B | B |
| Comparative Example 1-3 | D | Rutile | 48.0 | 27.40 | 0.04 | 9.2 | 0.74 | 17.6 | 17.2 | 119 | A | E | B | A |

Table 3-1

| | Titanium oxide | | | | Print layer | | Paper layer | | | | Sealant layer | | Barrier layer | Raman intensity ratio | Clarity of one print-out dot | Print-out uniformity | Barrier properties | | | Heat seal peeling strength | | Smoking properties |
|---|---|---|---|---|---|---|---|---|---|---|---|---|---|---|---|---|---|---|---|---|---|---|
| | Type | Crystal system | Crystallite size | Diffraction angle | Titanium oxide content | Thickness | Length-weighted average fiber length | Fiber width | Amount of fine fiber | Degree of water retention | Procedure | Resin | | | | | Water vapor barrier properties | Oxygen barrier properties | Rate of reduction after laser irradiation | Before laser irradiation | Rate of reduction after laser irradiation | |
| | | | nm | ° | g/m² | μm | mm | μm | % | % | | | | | | | | | | | | |
| Example 2-1 | A | Rutile | 36.9 | 27.41 | 0.5 | 9.0 | 0.74 | 17.6 | 17.2 | 119 | Extrusion lamination | PE | None | A | C | A | A | - | A | A | A | B |
| Example 2-2 | B | Anatase | 41.8 | 25.22 | 0.5 | 9.0 | 0.74 | 17.6 | 17.2 | 119 | Extrusion lamination | PE | None | A | B | A | A | - | A | A | A | B |
| Example 2-3 | C | Rutile | 44.9 | 27.48 | 0.5 | 9.0 | 0.74 | 17.6 | 17.2 | 119 | Extrusion lamination | PE | None | A | A | A | A | - | A | A | A | B |
| Example 2-4 | D | Rutile | 48.0 | 27.40 | 0.5 | 9.0 | 0.74 | 17.6 | 17.2 | 119 | Extrusion lamination | PE | None | A | A | A | A | - | A | A | A | B |
| Example 2-5 | E | Anatase | 51.3 | 25.29 | 0.5 | 9.0 | 0.74 | 17.6 | 17.2 | 119 | Extrusion lamination | PE | None | A | A | B | A | - | A | A | A | B |
| Example 2-6 | F | Rutile | 55.3 | 27.40 | 0.5 | 9.0 | 0.74 | 17.6 | 17.2 | 119 | Extrusion lamination | PE | None | A | B | C | A | - | A | A | A | B |
| Example 2-7 | G | Rutile | 43.2 | 27.60 | 0.5 | 9.0 | 0.74 | 17.6 | 17.2 | 119 | Extrusion lamination | PE | None | A | B | B | A | - | A | A | A | B |
| Example 2-8 | H | Rutile | 42.9 | 27.74 | 0.5 | 9.0 | 0.74 | 17.6 | 17.2 | 119 | Extrusion lamination | PE | None | A | D | B | A | - | A | A | A | B |
| Example 2-9 | D | Rutile | 48.0 | 27.40 | 0.1 | 9.3 | 0.74 | 17.6 | 17.2 | 119 | Extrusion lamination | PE | None | A | D | B | A | - | A | A | A | A |
| Example 2-10 | D | Rutile | 48.0 | 27.40 | 2.4 | 7.9 | 0.74 | 17.6 | 17.2 | 119 | Extrusion lamination | PE | None | A | A | B | A | - | A | A | A | C |
| Example 2-11 | D | Rutile | 48.0 | 27.40 | 4.2 | 6.9 | 0.74 | 17.6 | 17.2 | 119 | Extrusion lamination | PE | None | A | C | C | A | - | A | A | A | D |
| Example 2-12 | D | Rutile | 48.0 | 27.40 | 0.5 | 4.8 | 0.74 | 17.6 | 17.2 | 119 | Extrusion lamination | PE | None | A | B | B | A | - | A | A | A | B |
| Example 2-13 | D | Rutile | 48.0 | 27.40 | 0.5 | 2.6 | 0.74 | 17.6 | 17.2 | 119 | Extrusion lamination | PE | None | A | C | B | A | - | A | A | A | C |
| Example 2-14 | D | Rutile | 48.0 | 27.40 | 0.5 | 24.1 | 0.74 | 17.6 | 17.2 | 119 | Extrusion lamination | PE | None | A | A | A | A | - | A | A | A | B |
| Example 2-15 | D | Rutile | 48.0 | 27.40 | 0.5 | 9.0 | 1.80 | 26.8 | 22.7 | 134 | Extrusion lamination | PE | None | A | B | B | A | - | A | A | A | B |
| Example 2-16 | D | Rutile | 48.0 | 27.40 | 0.5 | 9.0 | 1.98 | 31.2 | 32.3 | 142 | Extrusion lamination | PE | None | A | C | C | A | - | A | A | A | B |
| Example 2-17 | D | Rutile | 48.0 | 27.40 | 0.5 | 9.0 | 0.67 | 17.6 | 35.0 | 145 | Extrusion lamination | PE | None | A | A | B | A | - | A | A | A | B |
| Example 2-18 | D | Rutile | 48.0 | 27.40 | 0.5 | 9.0 | 0.74 | 17.6 | 6.0 | 102 | Extrusion lamination | PE | None | A | A | A | A | - | A | A | A | C |
| Example 2-19 | D | Rutile | 48.0 | 27.40 | 0.5 | 9.0 | 0.74 | 17.6 | 17.2 | 119 | Extrusion lamination | PE | None | A | A | A | A | - | A | A | A | A |
| Example 2-20 | D | Rutile | 48.0 | 27.40 | 0.5 | 9.0 | 0.74 | 17.6 | 17.2 | 119 | Extrusion lamination | PE | None | A | A | A | A | - | A | A | A | A |
| Example 2-21 | D | Rutile | 40.7 | 27.46 | 0.9 | 20.0 | 0.74 | 17.6 | 17.2 | 119 | Extrusion lamination | PE | None | A | A | B | A | - | A | A | A | B |
| Example 2-22 | D | Rutile | 48.0 | 27.40 | 1.5 | 1.0 | 0.74 | 17.6 | 17.2 | 119 | Extrusion lamination | PE | None | A | C | C | A | - | A | A | A | C |

Table 3-2

| | Titanium oxide | | | | Print layer | | Paper layer | | | | Sealant layer | | Barrier layer | Raman intensity ratio | Clarity of one print-out dot | Print-out uniformity | Barrier properties | | | Heat seal peeling strength | | Smoking properties |
|---|---|---|---|---|---|---|---|---|---|---|---|---|---|---|---|---|---|---|---|---|---|---|
| | Type | Crystal system | Crystallite size | Diffraction angle | Titanium oxide content | Thickness | Length-weighted average fiber length | Fiber width | Amount of fine fiber | Degree of water retention | Procedure | Resin | | | | | Water vapor barrier properties | Oxygen barrier properties | Rate of reduction after laser irradiation | Before laser irradiation | Rate of reduction after laser irradiation | |
| | | | nm | ° | g/m² | μm | mm | μm | % | % | | | | | | | | | | | | |
| Example 2-23 | D | Rutile | 48.0 | 27.40 | 0.5 | 9.0 | 0.74 | 17.6 | 17.2 | 119 | Dry lamination | PE | None | A | A | A | A | - | A | A | A | B |
| Example 2-24 | D | Rutile | 48.0 | 27.40 | 0.5 | 9.0 | 0.74 | 17.6 | 17.2 | 119 | Extrusion lamination | PP | None | A | A | A | A | - | A | A | A | B |
| Example 2-25 | D | Rutile | 48.0 | 27.40 | 0.5 | 9.0 | 0.74 | 17.6 | 17.2 | 119 | Dry lamination | CPP | None | A | A | A | A | - | A | A | A | B |
| Example 2-26 | D | Rutile | 48.0 | 27.40 | 0.5 | 9.0 | 0.74 | 17.6 | 17.2 | 119 | Coating | Et-AA | None | A | A | A | A | - | A | C | A | B |
| Example 2-27 | D | Rutile | 48.0 | 27.40 | 0.5 | 9.0 | 0.74 | 17.6 | 17.2 | 119 | Coating | Et-MAA | None | A | A | A | A | - | A | C | A | B |
| Example 2-28 | D | Rutile | 48.0 | 27.40 | 0.5 | 9.0 | 0.74 | 17.6 | 17.2 | 119 | Coating | St-AA | None | A | A | A | A | - | A | C | A | B |
| Example 2-29 | D | Rutile | 48.0 | 27.40 | 0.5 | 9.0 | 0.74 | 17.6 | 17.2 | 119 | Extrusion lamination | PE | EVOH | A | A | A | A | A | A | A | A | B |
| Example 2-30 | D | Rutile | 48.0 | 27.40 | 0.5 | 9.0 | 0.74 | 17.6 | 17.2 | 119 | Coating | Et-AA | PVA + Synthetic mica | A | A | A | A | A | A | C | A | B |
| Example 2-31 | D | Rutile | 48.0 | 27.40 | 0.5 | 9.0 | 0.74 | 17.6 | 17.2 | 119 | Coating | Et-AA | Urethane + Synthetic mica | A | A | A | A | A | A | C | A | B |
| Example 2-32 | D | Rutile | 48.0 | 27.40 | 0.5 | 9.0 | 0.74 | 17.6 | 17.2 | 119 | Extrusion lamination | PE | Aluminum-deposited + PP | A | A | A | A | A | A | A | A | B |
| Example 2-33 | D | Rutile | 48.0 | 27.40 | 0.5 | 9.0 | 0.74 | 17.6 | 17.2 | 119 | Extrusion lamination | PE | Aluminum-deposited + PET | A | A | A | A | A | A | A | A | B |
| Example 2-34 | D | Rutile | 48.0 | 27.40 | 0.5 | 9.0 | 0.74 | 17.6 | 17.2 | 119 | Extrusion lamination | PE | Silica-deposited + PP | A | A | A | A | A | A | A | A | B |
| Example 2-35 | D | Rutile | 48.0 | 27.40 | 0.5 | 9.0 | 0.74 | 17.6 | 17.2 | 119 | Extrusion lamination | PE | Silica-deposited + PET | A | A | A | A | A | A | A | A | B |
| Example 2-36 | D | Rutile | 48.0 | 27.40 | 0.5 | 9.0 | 0.74 | 17.6 | 17.2 | 119 | Extrusion lamination | PE | Alumina-deposited + PET | A | A | A | A | A | A | A | A | B |
| Example 2-37 | D | Rutile | 48.0 | 27.40 | 0.5 | 9.0 | 0.74 | 17.6 | 17.2 | 119 | Extrusion lamination | PE | PVDC + PET | A | A | A | A | A | A | A | A | B |
| Comparative Example 2-1 | I | Anatase | 20.1 | 25.28 | 0.5 | 9.0 | 0.74 | 17.6 | 17.2 | 119 | Extrusion lamination | PE | None | B | E | B | A | - | A | A | A | B |
| Comparative Example 2-2 | J | Rutile | 11.2 | 27.46 | 0.5 | 9.0 | 0.74 | 17.6 | 17.2 | 119 | Extrusion lamination | PE | None | B | E | B | A | - | A | A | A | B |
| Comparative Example 2-3 | D | Rutile | 48.0 | 27.40 | 0.04 | 9.2 | 0.74 | 17.6 | 17.2 | 119 | Extrusion lamination | PE | None | A | E | B | A | - | A | A | A | A |
| Reference Example 2-1 | D | Rutile | 48.0 | 27.40 | 0.5 | 9.2 | 0.74 | 17.6 | 17.2 | 119 | None | None | None | A | A | A | D | - | - | D | - | B |

According to the results in Table 2, each of the paper sheets for printing of Examples was adopted to perform printing with ultraviolet laser, thereby providing a print product having a print image excellent in print-out clarity with respect to one dot.

The paper sheet for printing of Example 1-6, in which titanium oxide having a crystallite size of 55.3 nm, namely, a relatively large crystallite size, was used, was observed to be reduced in print-out uniformity, such a reduction being considered to be due to a reduction in the dispersion stability of the titanium oxide.

When each of the paper sheets for printing of Comparative Examples 1-1 and 1-2, comprising titanium oxide having a crystallite size of less than 30 nm, was used, a print image inferior in print-out clarity with respect to one dot was obtained even by printing with ultraviolet laser. In addition, even the paper sheet for printing of Comparative Example 1-3, having a titanium oxide content in the print layer of less than 0.1 g/m$^2$, did not achieve sufficient print-out clarity with respect to one dot.

According to the results in Table 3, each of the paper sheets for printing of Examples was adopted to perform printing with ultraviolet laser, thereby providing a print product having a print image excellent in print-out clarity with respect to one dot.

Furthermore, heat sealing properties were exhibited and water vapor barrier properties were also excellent. Each of the paper sheets for ultraviolet laser printing of Examples 2-29 to 2-37, in which the barrier layer was formed, was also excellent in oxygen barrier properties. In addition, reductions in barrier properties and heat sealing properties due to printing with ultraviolet laser were suppressed.

The paper sheet for printing of Example 2-6, in which titanium oxide having a crystallite size of 55.3 nm, namely, a relatively large crystallite size, was used, was observed to be reduced in print-out uniformity, such a reduction being considered to be due to a reduction in the dispersion stability of the titanium oxide.

When each of the paper sheets for printing of Comparative Examples 2-1 and 2-2, comprising titanium oxide having a crystallite size of less than 30 nm, was used, a print image inferior in print-out clarity with respect to one dot was obtained even by printing with ultraviolet laser. In addition, even the paper sheet for printing of Comparative Example 2-3, having a titanium oxide content in the print layer of less than 0.1 g/m$^2$, did not achieve sufficient print-out clarity with respect to one dot.

When the paper sheet for printing of Reference Example 2-1, comprising no sealant layer, was used, heat sealing properties and water vapor barrier properties were not obtained.

Industrial Applicability

The paper sheet for printing of the present invention can allow a print product excellent in viewability to be provided due to discoloration of titanium oxide by irradiation with ultraviolet laser, and allows for excellent print-out clarity with respect to one dot. The paper sheet for ultraviolet laser printing of the present invention is suitably applied to processed articles such as a package, a label and a pressure-sensitive adhesive tape on which variable information such as a date and a barcode is to be printed. Furthermore, the method for producing a print product of the present invention is suitably applied to printing of variable information onto, for example, a package, a label, and a pressure-sensitive adhesive tape.

**Claims**

1.  A paper sheet for ultraviolet laser printing, comprising a print layer comprising titanium oxide, on a paper substrate, wherein

    a titanium oxide content in the print layer is 0.1 g/m$^2$ or more, and
    a crystallite size of the titanium oxide in the print layer is 30 nm or more.

2.  The paper sheet for ultraviolet laser printing according to claim 1, wherein the crystallite size of the titanium oxide is 53 nm or less.

3.  The paper sheet for ultraviolet laser printing according to claim 1, wherein the titanium oxide in the print layer is rutile-type titanium oxide, and the titanium oxide has a diffraction angle of 27.60° or less.

4.  The paper sheet for ultraviolet laser printing according to claim 1, wherein pulp constituting the paper substrate has a length-weighted average fiber length of 2.0 mm or less.

5.  The paper sheet for ultraviolet laser printing according to claim 1, wherein the titanium oxide content in the print layer is 10 g/m$^2$ or less.

6.  The paper sheet for ultraviolet laser printing according to claim 1, wherein a proportion of the number of fine fibers having a fiber length of 0.2 mm or less, in pulp fiber constituting the paper substrate, is 4% or more and 40% or less.

7.  The paper sheet for ultraviolet laser printing according to claim 1, wherein pulp fiber constituting the paper substrate has a degree of water retention of 100% or more.

**EP 4 527 633 A1**

8. The paper sheet for ultraviolet laser printing according to claim 1, comprising a sealant layer on an opposite surface to a surface of the paper substrate on which the print layer is provided.

9. The paper sheet for ultraviolet laser printing according to claim 1, further comprising a barrier layer.

10. A print product obtained from the paper sheet for ultraviolet laser printing according to any one of claims 1 to 9, wherein

the print layer has a printed region comprising discolored titanium oxide in at least one portion thereof, and a ratio of a Raman intensity assigned to titanium oxide in the printed region to a Raman intensity assigned to titanium oxide in a non-printed region is 0.70 or less.

11. A processed article obtained with the paper sheet for ultraviolet laser printing according to any one of claims 1 to 9.

12. A processed article obtained with the print product according to claim 11.

13. A method for producing a print product, comprising a step of performing printing by irradiation of the paper sheet for ultraviolet laser printing according to any one of claims 1 to 9, with ultraviolet laser, and thus discoloration of an irradiated region.

14. The method for producing a print product according to claim 13, wherein the printing step is a step of performing irradiation with ultraviolet laser so that a ratio of a Raman intensity assigned to titanium oxide in the printed region to a Raman intensity assigned to titanium oxide in a non-printed region is 0.70 or less.

15. An ink composition comprising titanium oxide having a crystallite size of 30 nm or more, to be used for formation of a print layer to be discolored by irradiation with ultraviolet laser.

16. The ink composition according to claim 15, wherein the crystallite size of the titanium oxide is 53 nm or less.

17. The ink composition according to claim 15 or 16, wherein the titanium oxide is rutile-type titanium oxide and the titanium oxide has a diffraction angle of 27.60° or less.

[Fig. 1]

[Fig. 2A]

[Fig. 2B]

## INTERNATIONAL SEARCH REPORT

| | International application No. |
|---|---|
| | **PCT/JP2023/018266** |

### A. CLASSIFICATION OF SUBJECT MATTER

*B41M 5/26*(2006.01)i; *B32B 27/20*(2006.01)i; *C01G 23/047*(2006.01)i; *C09D 11/037*(2014.01)i
FI: B41M5/26; C01G23/047; B32B27/20 A; C09D11/037

According to International Patent Classification (IPC) or to both national classification and IPC

### B. FIELDS SEARCHED

Minimum documentation searched (classification system followed by classification symbols)

B41M5/26; B32B27/20; C01G23/047; C09D11/037

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-50447 A (OJI HOLDINGS CORP) 30 March 2022 (2022-03-30) paragraphs [0054]-[0124], [0172]-[0248] | 1-17 |
| X | JP 10-237319 A (NIPPON KAYAKU CO LTD) 08 September 1998 (1998-09-08) paragraphs [0015]-[0021] | 15-17 |
| Y | | 1-17 |
| Y | JP 6-278380 A (NEW OJI PAPER CO LTD) 04 October 1994 (1994-10-04) paragraphs [0011]-[0014], [0045]-[0077] | 7 |

☐ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

International application No.

**PCT/JP2023/018266**

| Patent document cited in search report | | | Publication date (day/month/year) | Patent family member(s) | | | Publication date (day/month/year) |
|---|---|---|---|---|---|---|---|
| JP | 2022-50447 | A | 30 March 2022 | EP paragraphs [0129]-[0330], [0434]-[0627] CN WO | 4155077 115666956 2021/235556 | A1 A A1 | |
| JP | 10-237319 | A | 08 September 1998 | (Family: none) | | | |
| JP | 6-278380 | A | 04 October 1994 | US column 8, line 36 to column 9, line 16, column 12, line 60 to column 13, line 25 EP | 5418057 0618080 | A A2 | |

Form PCT/ISA/210 (patent family annex) (January 2015)

**REFERENCES CITED IN THE DESCRIPTION**

**Patent documents cited in the description**

- JP H9123607 A
- JP 2020075943 A
- JP 2012057112 A
- WO 2015016069 A
- JP 2015096568 A